# EUROPEAN PATENT APPLICATION

(11) **EP 4 725 634 A1**
(43) Date of publication of application: **15.04.2026**
(21) Application number: 24887348.1
(22) Date of filing: 22.05.2024
(51) Int. Cl.: B23K 20/10, B23K 20/26, H01M 50/531, H01M 50/543, H01M 50/593

(54) **ULTRASONIC WELDING HEAD, ULTRASONIC WELDING DEVICE, ELECTRODE ASSEMBLY, BATTERY CELL, BATTERY AND ELECTRICAL DEVICE**

(30) Priority: 06.11.2023 CN 202311465441
(71) Applicant: Contemporary Amperex Technology Co., Limited, Ningde, Fujian 352100 (CN)
(72) Inventor: WU, Kai, Ningde, Fujian 352100 (CN); HUANG, Zhongbao, Ningde, Fujian 352100 (CN); LIN, Jie, Ningde, Fujian 352100 (CN); LIN, Wenfa, Ningde, Fujian 352100 (CN); WEN, Yaoling, Ningde, Fujian 352100 (CN); WEI, Yong, Ningde, Fujian 352100 (CN); HUANG, Biao, Ningde, Fujian 352100 (CN)
(74) Representative: Ran, Handong
(86) International application number: PCT/CN2024/094748
(87) International publication number: WO 2025/097724

(57) **Abstract**

An ultrasonic welding head (10). The ultrasonic welding head comprises a welding head main body (1) and first welding teeth (2); the welding head main body is provided with a welding surface (1a), the first welding teeth protruding from the welding surface; the first welding teeth comprises a plurality of tooth parts (20), the plurality of tooth parts respectively being a first tooth part (21) to an m-th tooth part which are successively arranged in the protruding direction of the first welding teeth; the n-th tooth part is arranged on the end surface of the end of the (n-1)th tooth part away from the welding surface, the end surface of the end of the (n-1)th tooth part away from the welding surface exceeding the n-th tooth part, and 2 ≤ n ≤ m. The present application further relates to an ultrasonic welding device, an electrode assembly (30), a battery cell (100), a battery (200), and an electrical device (1000).

## Description

### CROSS-REFERENCE TO RELATED APPLICATION

The present application is presented based on Chinese Patent Application No. 202311465441.4 filed on November 06, 2023, and claims the priority to the Chinese Patent Application described above, the content of which is incorporated herein by reference in its entirety.

### TECHNICAL FIELD

The present disclosure relates to the field of welding technologies, and in particular, to an ultrasonic welding head, an ultrasonic welding device, an electrode assembly, a battery cell, a battery, and an electric device.

### BACKGROUND

In recent years, new energy vehicles have developed by leaps and bounds. In the field of electric vehicles, batteries, as the power source of electric vehicles, play an irreplaceable and important role. Batteries, as core components of new energy vehicles, have high requirements in terms of both energy density and reliability.

### SUMMARY

The present application provides an ultrasonic welding head, an ultrasonic welding device, an electrode assembly, a battery cell, and an electric device. The ultrasonic welding head can achieve reliable welding of corresponding components of the battery cell and improve the service reliability of the battery cell.

In a first aspect, embodiments of the present application provide an ultrasonic welding head, including: a welding head main body and first welding teeth. The welding head main body is provided with a welding surface; the first welding teeth are disposed in a protruding manner on the welding surface, the first welding tooth includes a plurality of tooth parts, and the plurality of tooth parts are a first tooth part to an m-th tooth part sequentially arranged in a protruding direction of the first welding tooth, respectively. An n-th tooth part is disposed on an end surface of an end of an (n-1)-th tooth part distal to the welding surface, and the end surface of the end of the (n-1)-th tooth part distal to the welding surface extends beyond the n-th tooth part, where 2 ≤ n ≤ m.

In the above technical solution, the first welding tooth protruding from the welding surface includes the first tooth part to the m-th tooth part sequentially arranged in the protruding direction, the n-th tooth part is disposed on the end surface of the end of the (n-1)-th tooth part distal to the welding surface 1a, and the end surface of the end of the (n-1)-th tooth part distal to the welding surface extends beyond the n-th tooth part, such that a part of the end surface of the end of the (n-1)-th tooth part distal to the welding surface, extending beyond the n-th tooth part, can be formed as a welding pressing surface. Therefore, when the ultrasonic welding head welds the welding material, each tooth part can perform compacting and pressing on multiple layers of foil materials of the welding material, to achieve multi-layer pressing on the welding material and compacting on the welding material, thereby effectively reducing gaps between the multiple layers of foil materials, further reducing welding energy loss easily caused by an excessively large inter-layer gap between the multiple layers of foil materials, and preventing the first welding tooth from penetrating the welding material, thereby improving welding quality and welding efficiency.

In some embodiments, a part of the end surface of the end of the (n-1)-th tooth part distal to the welding surface 1a, extending beyond the n-th tooth part, is an annular surface.

In the above technical solution, the part of the end surface of the end of the (n-1)-th tooth part distal to the welding surface, extending beyond the n-th tooth part, is formed as an annular surface, such that the (n-1)-th tooth part performs a large-area and even pressing on the corresponding partial region of the welding material, which is beneficial to improving the compacting effect of the (n-1)-th tooth part on the welding material, so as to further mitigate the issue of an excessively large gap between the multiple layers of foil materials.

In some embodiments, each of the first tooth part to the m-th tooth part is of any one of a truncated pyramid structure, a circular frustum structure, and a spherical structure.

In the above technical solution, each of the first tooth part and the m-th tooth part is of any one of a truncated pyramid structure, a circular frustum structure, and a spherical structure, such that the structure of each tooth part is simplified and the structural strength of each tooth part is considered, which is beneficial to achieving a diversified structural design of the ultrasonic welding head, so as to better meet an actual differentiated requirement. In addition, a part of the end surface of an end of each of the first tooth part to the (n-1)-th tooth part distal to the welding surface is facilitated to form the welding pressing surface, thereby improving welding quality.

In some embodiments, there is at least one first welding tooth, there is one first tooth part of the first welding tooth, and from the first tooth part to the m-th tooth part, a number of the (n-1)-th tooth parts is less than or equal to a number of the n-th tooth parts.

In the above technical solution, there is one first tooth part of the first welding tooth, and the number of the (n-1)-th tooth parts is less than or equal to the number of the n-th tooth parts, such that in a region corresponding to the first welding tooth, a plurality of partial positions in the above region can be compacted by using at least a plurality of m-th tooth parts, which is beneficial to appropriately reducing the number of first welding teeth. When there are a plurality of first welding teeth, a plurality of partial positions in the welding region can be compacted by using the plurality of first welding teeth, which is beneficial to appropriately reducing the number of m-th tooth parts, thereby simplifying the structure of the first welding tooth.

In some embodiments, there are a plurality of first welding teeth, and any two first welding teeth are spaced apart.

In the above technical solution, there are the plurality of first welding teeth, and any two first welding teeth are spaced apart, such that when the to-be-welded regions of the same area are welded, the plurality of first welding teeth can compact a plurality of partial positions, so as to achieve compacting on the entire to-be-welded region. In addition, the number of first welding teeth can be appropriately reduced, thereby facilitating the balance between welding quality and the simple structure of the ultrasonic welding head.

In some embodiments, end surfaces of the (n-1)-th tooth parts of the plurality of first welding teeth distal to the welding surface are arranged flush.

In the above technical solution, the end surfaces of the (n-1)-th tooth parts of the plurality of first welding teeth distal to the welding surface are arranged flush, such that the same-level tooth parts of the plurality of first welding teeth have a substantially consistent compacting effect on the welding material, which is beneficial to reducing the risk of poor compacting effects or the first welding tooth easily penetrating the welding material that can easily result from significant differences in compacting effects, thereby helping improve welding quality and welding yield.

In some embodiments, the ultrasonic welding head further includes: at least one second welding tooth, where the second welding tooth is disposed in a protruding manner on the welding surface, and the second welding tooth is disposed between two adjacent first welding teeth.

In the above technical solution, the second welding tooth is disposed between two adjacent first welding teeth, such that the second welding tooth can perform compacting and pressing on a partial region on the welding material corresponding to the spacing between the two adjacent first welding teeth, so as to reasonably use the arrangement space provided by the welding head main body to increase the compacting area of the welding material by the ultrasonic welding head. On the premise that the dimension of the ultrasonic welding head is substantially not increased, this helps further reduce gaps between multiple layers of foil materials and improve welding quality.

In some embodiments, the plurality of first welding teeth are arranged in a plurality of rows and a plurality of columns, and the second welding tooth is separately disposed between two adjacent columns of the first welding teeth in any two adjacent rows.

In the above technical solution, the second welding tooth is separately disposed between two adjacent columns of first welding teeth in any two adjacent rows, such that the arrangement space on the welding surface is reasonably used, thereby improving the compacting effect.

In some embodiments, in the protruding direction of the first welding tooth, a sum of heights of a second tooth part to the m-th tooth part is less than or equal to half of a height of the first welding tooth.

In the above technical solution, the sum of the heights of the second tooth part to the m-th tooth part is less than or equal to half of the height of the first welding tooth, such that the height distribution of the plurality of tooth parts in the first welding tooth is relatively reasonable, and thus the penetration force of the first welding tooth in the protruding direction thereof is relatively proper, which is beneficial to further reducing the risk that the first welding tooth penetrates the welding material in the welding process. In addition, this reduces the probability of false welding in the ultrasonic welding process caused by poor contact between the first welding tooth and the welding material, which occurs when the welding energy of the first welding tooth is not effectively transferred to the welding material due to the relatively large sum of the heights of the second tooth part to the m-th tooth part, thereby helping further improve welding tooth quality.

In some embodiments, in an ultrasonic vibration direction, at least one side of two opposite sides of the welding head main body is provided with a clearance surface, and an included angle between the clearance surface and the welding surface is an obtuse angle.

In the above technical solution, at least one side of two opposite sides of the welding head main body is provided with the clearance surface in the ultrasonic vibration direction, and the included angle between the clearance surface and the welding surface is an obtuse angle, such that the clearance surface can be used to provide clearance for the warpage of other regions of the welding material, such as the edge region of the welding material, caused by pressurization on a partial region of the welding material by the welding head main body in the welding process, so as to reduce the acting force between the welding head main body and the above warping part of the welding material, thereby making it difficult for the welding head main body to cut the welding material in the welding process and thus improving welding reliability. When the welding material includes a plurality of tab plates, the arrangement of the clearance surface can effectively improve the cracking of the tab plates.

In some embodiments, in the ultrasonic vibration direction, a distance between an end of the clearance surface distal to the welding surface and a corresponding end part of the welding surface 1a is D, where 0.3 mm ≤ D ≤ 2 mm; and/or, in the protruding direction of the first welding tooth, a distance between an end of the clearance surface distal to the welding surface and the welding surface is H4, where 0.5 mm ≤ H4 ≤ 2 mm.

In the above technical solution, the distance D between the end of the clearance surface distal to the welding surface and the corresponding end part of the welding surface satisfies 0.3 mm ≤ D ≤ 2 mm, and/or, the distance H4 between the end of the clearance surface distal to the welding surface and the welding surface satisfies 0.5 mm ≤ H4 ≤ 2 mm, such that the position and dimension of the clearance surface are relatively reasonable, so as to better adapt to actual applications on the premise of providing effective clearance for the warping part of the welding material.

In some embodiments, 0.5 mm ≤ D ≤ 1 mm; and/or, H4 ≤ 1 mm.

In the above technical solution, 0.5 mm ≤ D ≤ 1 mm, and/or, H4 ≤ 1 mm, such that the position and dimension of the clearance surface are further enabled to be more reasonable, which is beneficial to improving the adaptability of the welding head main body to different welding region dimensions on the premise of improving the cracking of the welding material.

In some embodiments, a smooth transition is achieved between the clearance surface and the welding surface through a circular arc surface.

In the above technical solution, the smooth transition is achieved between the clearance surface and the welding surface through the circular arc surface, such that a part of the welding head main body opposite to the welding material substantially has no sharp corner position; even if the welding head main body is in contact with the welding material, the risk of the welding head main body cutting the welding material can be further reduced.

In some embodiments, each clearance surface is separately formed as a flat surface and inclined relative to the welding surface.

In the above technical solution, each clearance surface is separately formed as a flat surface and inclined relative to the welding surface, so as to simplify the shape of the outer surface of the welding head main body on the premise that the clearance surface can provide clearance for the warping part of the welding material, thereby simplifying the structure of the welding head main body and facilitating processing.

In some embodiments, a radius of the circular arc surface is R1, where 0.3 mm ≤ R1 ≤ 1.5 mm.

In the above technical solution, the radius R1 of the circular arc surface satisfies 0.3 mm ≤ R1 ≤ 1.5 mm, so as to reduce the risk of the welding head main body cutting the welding material and save the space occupied by the welding head main body at the same time, thereby preventing waste due to the excessively large dimension of the welding head main body while preventing the welding head main body from cutting the welding material.

In some embodiments, R1 ≤ 1 mm.

In the above technical solution, R1 ≤ 1 mm, such that the dimension of the circular arc surface is further reasonably set; a better balance is achieved between reducing the risk of the welding head main body cutting the welding material and saving the space occupied by the welding head main body at the same time.

In some embodiments, the welding surface is provided with a first region and a second region, and the first welding teeth are disposed in the first region; the ultrasonic welding head further includes: third welding teeth, where the third welding teeth are disposed in a protruding manner in the second region and are disposed at a periphery of the plurality of first welding teeth.

In the above technical solution, the first welding teeth are disposed in the first region and the third welding teeth are disposed in the second region, which is beneficial to increasing the area of the compacted region of the welding material by the welding head main body, increasing the number of partial regions where the welding head main body compacts the welding material, and further improving ultrasonic welding quality. At the same time, the third welding tooth can perform a certain pre-pressing and shaping on the peripheral part of the region of the welding material corresponding to the first welding tooth, so as to achieve pre-pressing and shaping on the welding material in advance. Moreover, the third welding tooth can optimize the friction region between the welding material and the welding head main body from the large-surface friction to the partial-surface friction, thereby reducing the local stress concentration of the welding material and further improving the cracking of the welding material.

In some embodiments, the second region is disposed around the first region and includes a plurality of first region segments sequentially connected end to end, each first region segment is separately provided with a plurality of third welding teeth, and a plurality of third welding teeth of the plurality of first region segments are disposed around the first region.

In the above technical solution, each first region segment in the second region is separately provided with the plurality of third welding teeth, such that the third welding teeth can perform a relatively comprehensive pre-pressing and shaping on the welding material. Therefore, no matter where the welding position corresponding to the welding head main body is located on the welding material, the third welding teeth can improve the cracking of the welding material.

In some embodiments, a height of the third welding tooth protruding from the welding surface is less than a height of the first welding tooth protruding from the welding surface.

In the above technical solution, the height of the third welding tooth protruding from the welding surface is less than the height of the first welding tooth protruding from the welding surface, and the height of the third welding tooth protruding from the welding surface is less than the height of the first welding tooth protruding from the welding surface, such that the third welding tooth has a proper pre-pressing and shaping effect on the welding material; meanwhile, the structure of the ultrasonic head welding head is simplified, and the material usage is reduced.

In some embodiments, the height of the third welding tooth protruding from the welding surface is greater than a height of the first tooth part protruding from the welding surface.

In the above technical solution, the height of the third welding tooth protruding from the welding surface is greater than the height of the first tooth part protruding from the welding surface, such that the third welding tooth is in contact with the welding material prior to the first tooth part, and thus the third welding tooth achieves a proper pre-pressing and shaping effect on the welding material.

In some embodiments, the third welding tooth is of a spherical structure, a radius of the third welding tooth is R3, and the height of the first welding tooth protruding from the welding surface is H1, where 0.2 ≤ R3/H1 ≤ 0.8.

In the above technical solution, the third welding tooth is of a spherical structure, such that the outer surface of the third welding tooth has no sharp corners, thereby reducing the risk of the third welding tooth cutting the welding material. In addition, 0.2 ≤ R3/H1 ≤ 0.8, such that the third welding tooth can be in contact with the welding material prior to the welding surface 1a, so as to achieve a good pre-pressing and shaping effect.

In some embodiments, 0.1 mm ≤ R3 ≤ 0.3 mm.

In some embodiments, the welding head main body is provided with a clearance surface on at least one side of two opposite sides in the ultrasonic vibration direction, an included angle between the clearance surface and the welding surface is an obtuse angle, a smooth transition is achieved between the clearance surface and the welding surface through a circular arc surface, and the third welding teeth are disposed at connection positions between the second region and the circular arc surface.

In the above technical solution, the third welding teeth are disposed at the connection positions between the second region and the circular arc surface, such that the third welding tooth can perform pre-pressing and shaping on the welding material, while reasonably using the arrangement space provided by the welding surface in the ultrasonic vibration direction. This reduces the volume of the ultrasonic welding head in the ultrasonic vibration direction and reduces costs.

In a second aspect, the embodiments of the present application provide an ultrasonic welding device, including the above ultrasonic welding head.

In the above technical solution, since the ultrasonic welding device adopts the above ultrasonic welding head, and the ultrasonic welding head can achieve the reliable welding of the tab plates of the battery cell to lay a good foundation for welding the tab plates to other components, the ultrasonic welding device can improve the service reliability of the battery cell.

In a third aspect, the embodiments of the present application provide an electrode assembly. The electrode assembly includes an active substance-coated part and a tab part. The tab part is connected to the active substance-coated part. The tab part includes a plurality of stacked tab plates, and the plurality of tab plates are welded and fixed. A weld mark region is provided on one side of a thickness of each of at least two tab plates, first welding grooves are formed in the weld mark region, and the first welding groove includes a plurality of groove parts. The plurality of groove parts are a first groove part to an m-th groove part sequentially arranged in a concave direction of the first welding groove, respectively; an n-th groove part is disposed at a bottom wall of an (n-1)-th groove part, and the bottom wall of the (n-1)-th groove part is provided to extend beyond the n-th groove part, where 2 ≤ n ≤ m.

In the above technical solution, the weld mark region is provided on the side of the thickness of each of at least two tab plates, the first welding grooves are formed in the weld mark region, the first welding groove includes the first groove part to the m-th groove part sequentially arranged in the concave direction of the first welding groove, the n-th groove part is disposed on the bottom wall of the (n-1)-th groove part, and the bottom wall of the (n-1)-th groove part is provided to extend beyond the n-th groove part, such that when the at least two tab plates are welded and fixed, the welding device can perform multi-layer pressing on the at least two tab plates to form a plurality of groove parts, thereby effectively reducing gaps between the plurality of tab plates while preventing the plurality of tab plates from being penetrated, thereby improving welding quality, facilitating the good welding of the tab part to other components (e.g., a post terminal or an adapting piece), and facilitating improvement in the service reliability of the battery cell.

In some embodiments, a part of the bottom wall of the (n-1)-th groove part, extending beyond the n-th groove part, is an annular surface.

In the above technical solution, the part of the bottom wall of the (n-1)-th groove part, extending beyond the n-th groove part, is an annular surface, such that the welding device performs a large-area and even pressing on a partial region, which is beneficial to improving the compacting effect on the plurality of tab plates.

In some embodiments, there is one first groove part of the first welding groove, and from the first groove part to the n-th groove part, a number of the (n-1)-th groove parts is less than or equal to a number of the n-th groove parts.

In the above technical solution, there is one first groove part of the first welding groove, and the number of the (n-1)-th groove parts is less than or equal to the number of the n-th groove parts, such that a plurality of partial positions can be compacted in a region corresponding to the first welding groove, which is beneficial to simplifying the structure of the welding device.

In some embodiments, there are a plurality of first welding grooves, and any two first welding grooves are spaced apart.

In the above technical solution, there are the plurality of first welding grooves, and any two first welding grooves are spaced apart, such that when the to-be-welded regions of the same area are welded, the welding device can compact a plurality of partial positions, so as to achieve compacting on the entire to-be-welded region.

In some embodiments, bottom walls of the (n-1)-th groove parts of the plurality of first welding grooves are arranged flush.

In the above technical solution, the bottom walls of the (n-1)-th groove parts of the plurality of first welding grooves are arranged flush, such that the welding device is facilitated to generate a substantially consistent compacting effect on the plurality of tab plates at the same level positions, which is beneficial to reducing the risk of poor compacting effects or the tab plates being penetrated that can easily result from significant differences in compacting effects, thereby helping improve welding quality and welding yield.

In some embodiments, at least one second welding groove is further formed in the weld mark region, and the second welding groove is disposed between two adjacent first welding grooves.

In the above technical solution, the arrangement of the second welding groove is beneficial to increasing the compacting area of the plurality of tab plates by the welding device without increasing the dimension of the welding device substantially.

In some embodiments, the plurality of first welding grooves are arranged in a plurality of rows and a plurality of columns, and the second welding groove is separately disposed between two adjacent columns of the first welding grooves in any two adjacent rows.

In the above technical solution, the second welding groove is separately disposed between two adjacent columns of the first welding grooves in any two adjacent rows, such that the welding device further reasonably uses the occupied space to improve the compacting effect on the plurality of tab plates.

In some embodiments, in the concave direction of the first welding groove, a sum of depths of a second groove part to the m-th groove part is less than or equal to half of a depth of the first welding groove.

In the above technical solution, the sum of the depths of the second groove part to the m-th groove part is less than or equal to half of the depth of the first welding groove, such that the depth distribution of the plurality of groove parts in the first welding groove is relatively reasonable, which reduces the risk of the tab plates being penetrated, and is beneficial to improving the contact effect between the welding device and the tab plates at the same time, thereby reducing the probability of false welding.

In some embodiments, the weld mark region includes a third region and a fourth region, the first welding grooves are formed in the third region, third welding grooves are further formed in the weld mark region, and the third welding grooves are formed in the fourth region and located at a periphery of the plurality of first welding grooves.

In the above technical solution, the arrangement of the third welding grooves enables the welding device to perform a certain pre-pressing and shaping on the plurality of tab plates at positions corresponding to the third welding grooves. In addition, this enables the welding device to optimize the friction region between the tab plates and the device into partial-surface friction, thereby reducing the local stress concentration of the tab plates and improving the cracking of the tab plates.

In some embodiments, the fourth region is disposed around the third region and includes a plurality of second region segments sequentially connected end to end, each second region segment is separately provided with a plurality of third welding grooves, and a plurality of third welding grooves of the plurality of second region segments are disposed around the third region.

In the above technical solution, the plurality of welding grooves are disposed around the third region, such that a relatively comprehensive pre-pressing and shaping can be performed on the tab plates at positions on the welding device corresponding to the third welding grooves.

In some embodiments, a depth of the third welding groove is less than the depth of the first welding groove.

In some embodiments, the depth of the third welding groove is greater than a depth of the first groove part.

In a fourth aspect, the embodiments of the present application provide a battery cell, including a housing, a post terminal, and the above electrode assembly. The post terminal is disposed on the housing, the active substance-coated part is accommodated in the housing, and the tab part is electrically connected to the post terminal.

In the above technical solution, the battery cell adopts the above electrode assembly, and the tab of the electrode assembly can be well welded directly or indirectly to the post terminal, such that the service reliability of the battery cell can be improved.

In a fifth aspect, the embodiments of the present application provide a battery, including the above battery cell.

In the above technical solution, the battery adopts the above battery cell, and the battery cell has good service reliability, such that the use reliability of the battery can be improved.

In a sixth aspect, the embodiments of the present application provide an electric device, including the above battery. The battery is configured to provide electric energy.

In the above technical solution, the electric device adopts the above battery, and the battery has good use reliability, such that the reliable use of the electric device can be achieved.

### BRIEF DESCRIPTION OF THE DRAWINGS

The above and/or additional aspects and advantages of the present disclosure will become apparent and readily understood from the description of embodiments in conjunction with the drawings below, in which:
FIG. 1 is a schematic view of a vehicle according to some embodiments of the present application;
FIG. 2 is an exploded view of a battery according to some embodiments of the present application;
FIG. 3 is a schematic view of an ultrasonic welding head according to some embodiments of the present application;
FIG. 4 is an enlarged view of the circled portion A in FIG. 3;
FIG. 5 is a schematic view of welding of the ultrasonic welding head shown in FIG. 3;
FIG. 6 is an enlarged view of the circled portion B in FIG. 5;
FIG. 7 is another schematic view of the ultrasonic welding head shown in FIG. 3;
FIG. 8 is an enlarged view of the circled portion C in FIG. 7;
FIG. 9 is yet another schematic view of the ultrasonic welding head shown in FIG. 7;
FIG. 10 is a partial schematic view of the ultrasonic welding head shown in FIG. 9;
FIG. 11 is a schematic view of an ultrasonic welding head according to some embodiments of the present application;
FIG. 12 is a schematic view of an ultrasonic welding head according to some embodiments of the present application;
FIG. 13 is a schematic view of an ultrasonic welding head according to some embodiments of the present application; and
FIG. 14 is a schematic view of an ultrasonic welding head according to some embodiments of the present application.

### Reference numerals:

electric device 1000, controller 300, motor 400, battery 200, battery cell 100, battery case 101, first case 101a, second case 101b, ultrasonic welding head 10, electrode assembly 30, active substance-coated part 31, tab part 32, welding head main body 1, welding surface 1a, clearance surface 1b, circular arc surface 1c, first region 1d, second region 1e, first region segment 1f, first welding tooth 2, tooth part 20, welding pressing surface 20a, first tooth part 21, second tooth part 22, second welding tooth 3, and third welding tooth 4.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings are only exemplary and should not impose any limitation on the present application.

The term "plurality of" used in the present application refers to no less than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, multi-prismatic, or in other shapes. This is also not limited in the embodiments of the present application. According to the way of encapsulation, battery cells are typically divided into three types: cylindrical battery cells, prismatic battery cells, and pouch battery cells. This is also not limited in the embodiments of the present application.

The battery mentioned in the embodiments of the present application refers to a single physical module including a plurality of battery cells to provide higher voltage and capacity. For example, the battery mentioned in the present application may be a battery module group, a battery pack, or the like. A battery module group generally includes a plurality of battery cells. The battery generally includes a case for encapsulating a plurality of battery cells or a plurality of battery module groups, and the case can prevent liquid or other foreign matters from affecting the charging or discharging of the battery cells. Certainly, the battery may alternatively not include a case.

Illustratively, a battery cell may typically include a housing, a battery cell assembly, and an electrolytic solution. The housing is configured to accommodate the battery cell assembly and the electrolytic solution, and at least one positive electrode post terminal and at least one negative electrode post terminal are disposed on the housing. The battery cell assembly includes one or a plurality of electrode assemblies, and the electrode assembly is formed by stacking or winding a positive electrode plate, a negative electrode plate, and a separator.

The positive electrode plate may typically include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab, and a plurality of positive electrode tab plates are stacked together and electrically connected to the positive electrode post terminal. Illustratively, the plurality of positive electrode tab plates stacked together may be directly welded to the positive electrode post terminal to form an electrical connection. Alternatively, the battery cell assembly may further include a positive electrode adapting piece, the plurality of positive electrode tab plates stacked together are welded to one end of the positive electrode adapting piece, and the other end of the positive electrode adapting piece is welded to the positive electrode post terminal to form an electrical connection between the positive electrode tab plates and the positive electrode post terminal.

The negative electrode plate may typically include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab plate, and a plurality of negative electrode tab plates are stacked together and electrically connected to the negative electrode post terminal. Illustratively, the plurality of negative electrode tab plates stacked together may be directly welded to the negative electrode post terminal to form an electrical connection. Alternatively, the battery cell assembly may further include a negative electrode adapting piece, the plurality of negative electrode tab plates stacked together are welded to one end of the negative electrode adapting piece, and the other end of the negative electrode adapting piece is welded to the negative electrode post terminal to form an electrical connection between the negative electrode tab plates and the negative electrode post terminal. The material of the separator is not limited, and may be, e.g., polypropylene or polyethylene.

In recent years, new energy vehicles have developed by leaps and bounds. In the field of electric vehicles, batteries, as the power source of electric vehicles, play an irreplaceable and important role. Batteries, as core components of new energy vehicles, have high requirements in terms of both energy density and reliability.

In the related art, with the requirements of batteries for high energy density and service reliability, some battery cells are generally not provided with an adapting piece structure. A plurality of tab plates of the battery cell are generally ultrasonically welded first to fix the plurality of tab plates into a tab, and then the tab is laser-welded to other components such as the post terminal and the top cover of the battery cell. Illustratively, the plurality of tab plates are ultrasonically welded to the adapting piece; the plurality of tab plates and the adapting piece are stacked to form an overlap structure; an ultrasonic welding head is pressed against the stacked tab plates, and a certain pressure is applied by using the ultrasonic welding head; then an ultrasonic device outputs an ultrasonic wave, and atomic resonance on adjacent tab plates is achieved under high-frequency vibration, thereby connecting the plurality of tab plates and the adapting piece together.

Ultrasonic welding is to transfer a high-frequency vibration wave to surfaces of two objects that need to be welded, and to cause the surfaces of the two objects to rub against each other to form fusion between molecular layers under pressurization. The ultrasonic welding has advantages such as high efficiency, high quality, aesthetics, energy conservation, and high welding strength. In the ultrasonic welding process, a conventional square ultrasonic welding head or a spherical ultrasonic welding head is typically used to weld a plurality of tab plates. Due to the unreasonable structure of the ultrasonic welding head, there are relatively large gaps between the plurality of tab plates, and these gaps may cause defects such as welding porosity, blowholes, and cracking in the subsequent process of welding the tab to other components of the battery cell, thereby greatly reducing the production yield, increasing the production cost, and reducing the service reliability of the battery cell.

Based on the above considerations, to improve the reliability of the battery cell, the embodiments of the present application provide an ultrasonic welding head, a battery welding head main body, and first welding teeth. The welding head main body is provided with a welding surface; the first welding teeth are disposed in a protruding manner on the welding surface, the first welding tooth includes a plurality of tooth parts, and the plurality of tooth parts are a first tooth part to an m-th tooth part sequentially arranged in the protruding direction of the first welding tooth, respectively; an n-th tooth part is disposed on the end surface of an end of an (n-1)-th tooth part distal to the welding surface, and the end surface of the end of the (n-1)-th tooth part distal to the welding surface extends beyond the n-th tooth part, where 2 ≤ n ≤ m.

In the above technical solution, the first welding tooth protruding from the welding surface 1a includes the first tooth part to the m-th tooth part sequentially arranged in the protruding direction, the n-th tooth part is disposed on the end surface of the end of the (n-1)-th tooth part distal to the welding surface, and the end surface of the end of the (n-1)-th tooth part distal to the welding surface extends beyond the n-th tooth part, such that a part of the end surface of the end of the (n-1)-th tooth part distal to the welding surface, extending beyond the n-th tooth part, can be formed as a welding pressing surface. Therefore, when the ultrasonic welding head welds the welding material, each tooth part can perform compacting and pressing on multiple layers of foil materials of the welding material, to achieve multi-layer pressing on the welding material and compacting on the welding material, thereby effectively reducing gaps between the multiple layers of foil materials, further reducing welding energy loss easily caused by an excessively large inter-layer gap between the multiple layers of foil materials, and preventing the first welding tooth from penetrating the welding material, thereby improving welding quality and welding efficiency.

The embodiments of the present application provide an electric device using the battery disclosed herein as a power source. The electric device may be, but is not limited to, a mobile phone, a tablet or laptop computer, an electric toy, an electric tool, an electric bike, an electric vehicle, a ship, a spacecraft, and the like. The electric toy may include a stationary or mobile electric toy, such as a game console, an electric car toy, an electric ship toy, and an electric aircraft toy; the spacecraft may include an airplane, a rocket, a space shuttle, a spaceship, and the like; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

For ease of explanation in the following embodiments, the structures of the electric device 1000, the battery 200, and the battery cell 100 of the present application are described in detail by taking the electric device 1000 as a vehicle as an example.

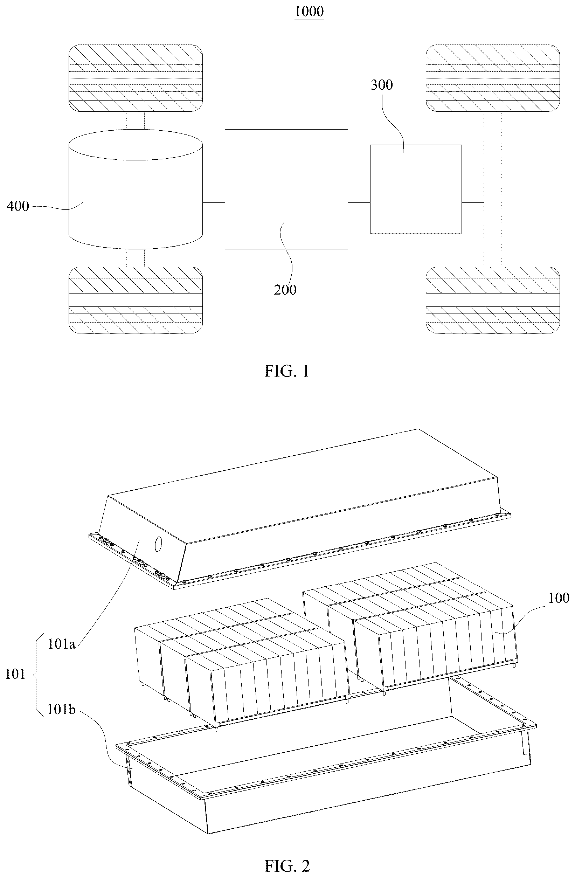

Referring to FIG. 1, FIG. 1 is a structural schematic view of a vehicle as an electric device 1000 according to some embodiments of the present application. The vehicle may be a fuel vehicle, a gas vehicle, or a new energy vehicle. The new energy vehicle may be a pure electric vehicle, a hybrid vehicle, an extended-range vehicle, or the like. A battery 200 is arranged in the vehicle, and the battery 200 may be arranged at the bottom, head, or tail of the vehicle. The battery 200 may be configured to supply power to the vehicle. For example, the battery 200 may serve as an operation power source for the vehicle. The vehicle may further include a controller 300 and a motor 400. The controller 300 is configured to control the battery 200 to supply power to the motor 400, e.g., for operation power needed by the vehicle for start-up, navigation, and driving. In some embodiments of the present application, the battery 200 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of a battery cell 100 used in the battery 200 according to some embodiments of the present application. The battery 200 includes a battery case 101 and a plurality of battery cells 100, and the battery cells 100 are accommodated in the battery case 101. The battery case 101 is configured to provide an assembly space for the battery cells, and the battery case 101 may be in various structures. In some embodiments, the battery case 101 may include a first case 101a and a second case 101b. The first case 101a and the second case 101b are lidded with each other. The first case 101a and the second case 101b jointly define an accommodating cavity for accommodating the battery cells 100. The second case 101b may be of a hollow structure with one end open, the first case 101a may be of a plate structure, and the open side of the second case 101b is lidded with the first case 101a, such that the first case 101a and the second case 101b jointly define an accommodating cavity; or the first case 101a and the second case 101b may also both be of a hollow structure with one side open (for example, as shown in FIG. 2), and the open side of the second case 101b is lidded with the open side of the first case 101a. Certainly, the battery case 101 formed by the first case 101a and the second case 101b may be in various shapes, such as cylindrical or rectangular parallelepiped-shaped.

In the battery 200, the plurality of battery cells 100 may be connected in series, in parallel, or in series-parallel. The series-parallel connection means that both series connection and parallel connection are present for the connection among the plurality of battery cells 100. The plurality of battery cells 100 may be directly connected in series, in parallel, or in series-parallel, and then the whole formed by the plurality of battery cells 100 is accommodated in the battery case 101. Alternatively, the battery 200 may also be in a form where the plurality of battery cells 100 are first connected in series, in parallel, or in series-parallel to give a battery module group, and then a plurality of battery module groups are connected in series, in parallel, or in series-parallel to form a whole and accommodated in the battery case 101. The battery 200 may further include other structures. For example, the battery 200 may further include a busbar for achieving the electrical connection between the plurality of battery cells 100.

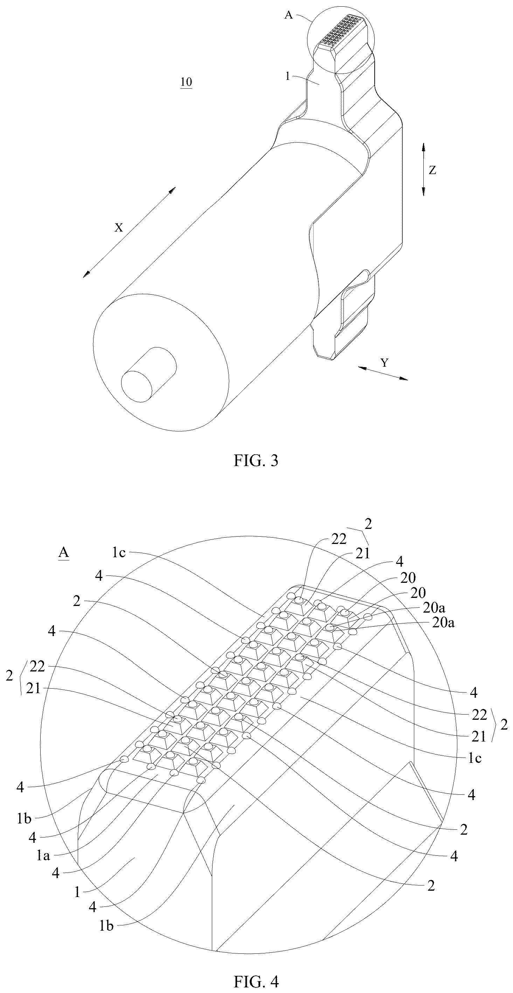

Referring to FIGs. 3 and 4, the ultrasonic welding head 10 includes a welding head main body 1 and first welding teeth 2. The welding head main body 1 is provided with a welding surface 1a. The first welding teeth 2 are disposed in a protruding manner on the welding surface 1a. The first welding tooth 2 includes a plurality of tooth parts 20, and the plurality of tooth parts 20 are a first tooth part 21 to an m-th tooth part sequentially arranged in the protruding direction of the first welding tooth 2 (e.g., the direction from the welding surface 1a toward a direction away from the welding head main body 1 in a direction Z in FIG. 3), respectively. An n-th tooth part is disposed on the end surface of an end of an (n-1)-th tooth part distal to the welding surface 1a, and the end surface of the end of the (n-1)-th tooth part distal to the welding surface 1a extends beyond the n-th tooth part, where 2 ≤ n ≤ m, that is, n may be any positive integer between 2 and m.

It can be seen that for the plurality of tooth parts 20, in any two adjacent tooth parts 20, the tooth part 20 distal to the welding surface 1a is disposed at an end, away from the welding surface 1a, of the tooth part 20 proximal to the welding surface 1a, and the end surface of the end, away from the welding surface 1a, of the tooth part 20 proximal to the welding surface 1a extends beyond the tooth part 20 distal to the welding surface 1a.

For example, if m = 2, then the plurality of tooth parts 20 are a first tooth part 21 and a second tooth part 22 sequentially arranged in the protruding direction of the first welding tooth 2, respectively. The second tooth part 22 is disposed on the end surface of an end of the first tooth part 21 distal to the welding surface 1a. The end surface of the end of the first tooth part 21 distal to the welding surface 1a extends beyond the second tooth part 22, and then on the welding surface 1a, the orthographic projection of the second tooth part 22 is located within the range of the outer contour of the orthographic projection of the end surface of the end of the first tooth part 21 distal to the welding surface 1a, such that a part of the orthographic projection of the end surface of the end of the first tooth part 21 distal to the welding surface 1a extends beyond the outer contour of the orthographic projection of the second tooth part 22.

For another example, if m = 3, then the plurality of tooth parts 20 are a first tooth part 21, a second tooth part 22, and a third tooth part 20 sequentially arranged in the protruding direction of the first welding tooth 2, respectively. The second tooth part 22 is disposed on the end surface of an end of the first tooth part 21 distal to the welding surface 1a, and the end surface of the end of the first tooth part 21 distal to the welding surface 1a extends beyond the second tooth part 22; then on the welding surface 1a, the orthographic projection of the second tooth part 22 is located within the range of the outer contour of the orthographic projection of the end surface of the end of the first tooth part 21 distal to the welding surface 1a, such that a part of the orthographic projection of the end surface of the end of the first tooth part 21 distal to the welding surface 1a extends beyond the outer contour of the orthographic projection of the second tooth part 22. The third tooth part 20 is disposed on the end surface of an end of the second tooth part 22 distal to the welding surface 1a; that is, the third tooth part 20 is disposed at an end of the second tooth part 22 away from the first tooth part 21, and the end surface of the end of the second tooth part 22 distal to the welding surface 1a extends beyond the third tooth part 20; then on the welding surface 1a, the orthographic projection of the third tooth part 20 is located within the range of the outer contour of the orthographic projection of the end surface of the end of the second tooth part 22 distal to the welding surface 1a, such that a part of the orthographic projection of the end surface of the end of the second tooth part 22 distal to the welding surface 1a extends beyond the outer contour of the orthographic projection of the third tooth part 20.

For another example, if m = 4, then the plurality of tooth parts 20 are a first tooth part 21, a second tooth part 22, a third tooth part 20, and a fourth tooth part 20 sequentially arranged in the protruding direction of the first welding tooth 2, respectively. The second tooth part 22 is disposed on the end surface of an end of the first tooth part 21 distal to the welding surface 1a, and the end surface of the end of the first tooth part 21 distal to the welding surface 1a extends beyond the second tooth part 22; then on the welding surface 1a, the orthographic projection of the second tooth part 22 is located within the range of the outer contour of the orthographic projection of the end surface of the end of the first tooth part 21 distal to the welding surface 1a, such that a part of the orthographic projection of the end surface of the end of the first tooth part 21 distal to the welding surface 1a extends beyond the outer contour of the orthographic projection of the second tooth part 22. The third tooth part 20 is disposed on the end surface of an end of the second tooth part 22 distal to the welding surface 1a; that is, the third tooth part 20 is disposed at an end of the second tooth part 22 away from the first tooth part 21, and the end surface of the end of the second tooth part 22 distal to the welding surface 1a extends beyond the third tooth part 20; then on the welding surface 1a, the orthographic projection of the third tooth part 20 is located within the range of the outer contour of the orthographic projection of the end surface of the end of the second tooth part 22 distal to the welding surface 1a, such that a part of the orthographic projection of the end surface of the end of the second tooth part 22 distal to the welding surface 1a extends beyond the outer contour of the orthographic projection of the third tooth part 20. The fourth tooth part 20 is disposed on the end surface of an end of the third tooth part 20 distal to the welding surface 1a; that is, the fourth tooth part 20 is disposed at an end of the third tooth part 20 away from the second tooth part 22, and the end surface of the end of the third tooth part 20 distal to the welding surface 1a extends beyond the fourth tooth part 20; then on the welding surface 1a, the orthographic projection of the fourth tooth part 20 is located within the range of the outer contour of the orthographic projection of the end surface of the end of the third tooth part 20 distal to the welding surface 1a, such that a part of the orthographic projection of the end surface of the end of the third tooth part 20 distal to the welding surface 1a extends beyond the outer contour of the orthographic projection of the fourth tooth part 20.

Certainly, m may alternatively be greater than or equal to 5.

It can be seen that for any two adjacent tooth parts 20, a part of the end surface of the end of the (n-1)-th tooth part distal to the welding surface 1a, extending beyond the n-th tooth part, may be formed as a welding pressing surface 20a. In the welding process, the m-th tooth part is in contact with the welding material prior to other tooth parts 20, so as to achieve pre-pressing and shaping on a partial region of the welding material, reducing gaps between multiple layers of foil materials of the welding material; in addition, the m-th tooth part can perform compacting and pressing on the multiple layers of foil materials. As the ultrasonic welding head 10 continuously applies pressure, the (m-1)-th tooth part to the first tooth part 21 are sequentially in contact with the welding material, so as to achieve multiple pre-pressing and shaping operations on a to-be-welded region of the welding material, further reducing gaps between the multiple layers of foil materials. In addition, when the (n-1)-th tooth part to the first tooth part 21 are in contact with the welding material, the welding pressing surfaces 20a of the (n-1)-th tooth part to the first tooth part 21 may sequentially compact and press the multiple layers of foil materials, such that the ultrasonic welding head 10 can perform multi-layer pressing on the welding material by using the first welding teeth 2 in the welding process, thereby effectively mitigating the issue of an excessively large gap between the multiple layers of foil materials in the ultrasonic welding process, and thus improving the quality and stability of ultrasonic welding.

Apparently, the outer surface of the m-th tooth part may be formed as the welding pressing surface 20a. In addition, since the first welding tooth 2 may perform multi-layer pressing on the welding material in the welding process, it ensures that the first welding tooth 2 does not penetrate the welding material in the welding process at the same time. This improves the penetration capability of the first welding tooth 2 in the protruding direction thereof without excessively increasing the penetration capability of the first welding tooth 2, so as to improve welding reliability.

In the above technical solution, the first welding tooth 2 protruding from the welding surface 1a includes the first tooth part 21 to the m-th tooth part sequentially arranged in the protruding direction, the n-th tooth part is disposed on the end surface of the end of the (n-1)-th tooth part distal to the welding surface 1a, and the end surface of the end of the (n-1)-th tooth part distal to the welding surface 1a extends beyond the n-th tooth part, such that a part of the end surface of the end of the (n-1)-th tooth part distal to the welding surface 1a, extending beyond the n-th tooth part, can be formed as a welding pressing surface 20a. Therefore, when the ultrasonic welding head 10 welds the welding material, each tooth part 20 can perform compacting and pressing on multiple layers of foil materials of the welding material, to achieve multi-layer pressing on the welding material and compacting on the welding material, thereby effectively reducing gaps between the multiple layers of foil materials, further reducing welding energy loss easily caused by an excessively large inter-layer gap between the multiple layers of foil materials, and preventing the first welding tooth 2 from penetrating the welding material, thereby improving welding quality and welding efficiency. The ultrasonic welding head 10 is simple in structure, convenient in welding processing, and easy to operate.

Illustratively, the ultrasonic welding head 10 is used for ultrasonic welding of the plurality of tab plates, such that the plurality of tab plates are welded and fixed to form a tab part 32. The ultrasonic welding head 10 in the embodiments of the present application can reduce gaps between the plurality of tab plates, can reduce the welding energy loss easily caused by an excessively large inter-layer gap between the plurality of tab plates, and can improve the welding energy utilization, thereby improving the efficiency of ultrasonic welding. Meanwhile, when the tab part 32 is laser-welded to other components, since the laser welding position overlaps the ultrasonic welding positions of the plurality of tab plates, the ultrasonic welding quality of the plurality of tab plates can be improved and gaps between the plurality of tab plates can be reduced according to the embodiments of the present application, such that the probability of defects such as welding porosity, blowholes, and cracking can be reduced when the tab part 32 is laser-welded to the other components, which is beneficial to improving the production yield and reducing the production cost. That is, after the ultrasonic welding head 10 in the embodiments of the present application welds the tab part 32 to other components, a good foundation can be laid for the subsequent laser welding of the tab part 32 to the other components, and the welding reliability between the tab part 32 and the other components can be improved, thereby improving the use reliability of the battery cell 100.

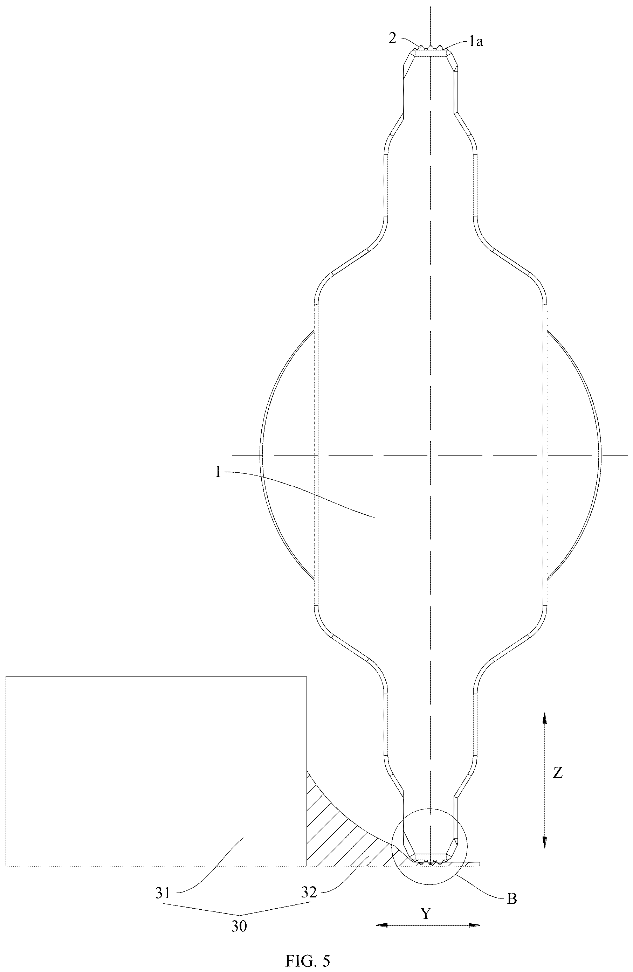

It can be understood that the welding head main body 1 of the ultrasonic welding head 10 in the embodiments of the present application may be provided with one welding surface 1a or a plurality of welding surfaces 1a. When the welding head main body 1 is provided with a plurality of welding surfaces 1a, at least one of the plurality of welding surfaces 1a is provided with the first welding teeth 2. Illustratively, as shown in FIG. 5, the welding head main body 1 is provided with two welding surfaces 1a disposed back-to-back, and each of the welding surfaces 1a is correspondingly provided with the first welding teeth 2 separately. The two welding surfaces 1a can operate simultaneously to simultaneously weld two to-be-welded positions, and the two welding surfaces 1a may also form a redundant design, such that when one of the welding surfaces 1a cannot operate, the welding operation can be performed first by using the other welding surface 1a. Certainly, there may be three or more welding surfaces 1a of the welding head main body 1.

In addition, in the embodiments of the present application, the welding surface 1a of the welding head main body 1 may be a flat surface or a curved surface (for example, a spherical surface), which is not specifically limited in the present application.

Referring to FIGs. 4, 7, and 8, in some embodiments, the part of the end surface of the end of the (n-1)-th tooth part distal to the welding surface 1a, extending beyond the n-th tooth part, is an annular surface, and the annular surface may be arranged around the n-th tooth part. For any tooth part 20 except the m-th tooth part, the welding pressing surface 20a of each tooth part 20 may be formed as an annular surface.

In the above technical solution, the part of the end surface of the end of the (n-1)-th tooth part distal to the welding surface 1a, extending beyond the n-th tooth part, is formed as an annular surface, such that the (n-1)-th tooth part performs a large-area and even pressing on the corresponding partial region of the welding material, which is beneficial to improving the compacting effect of the (n-1)-th tooth part on the welding material, so as to further mitigate the issue of an excessively large gap between the multiple layers of foil materials.

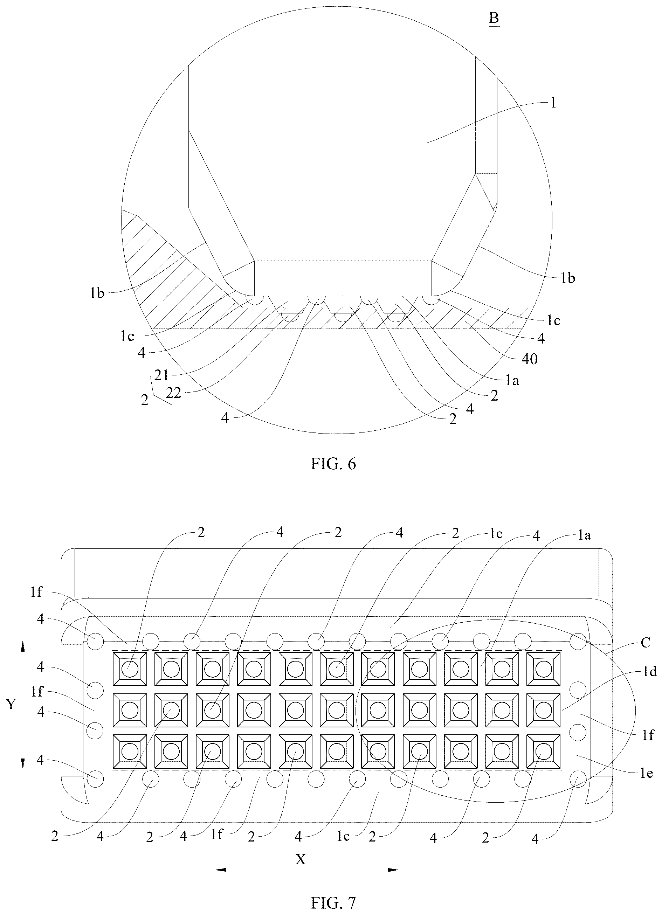

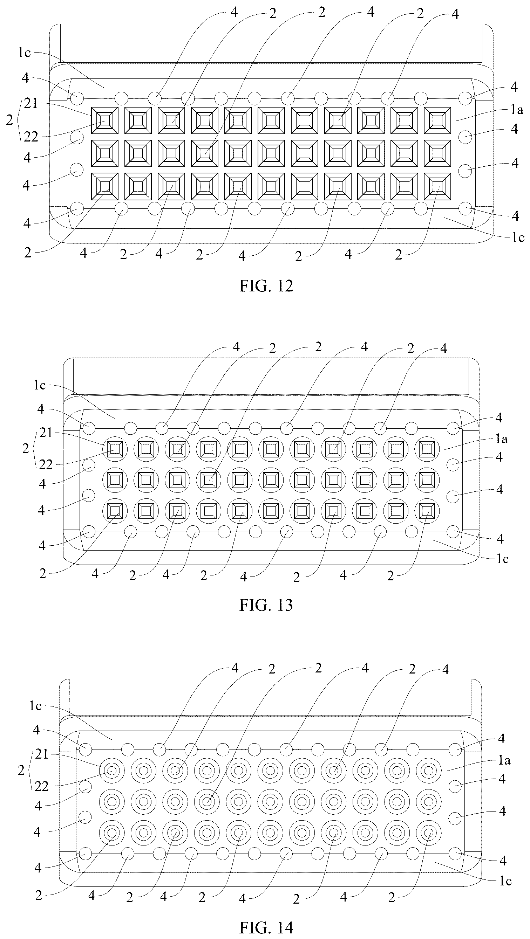

Illustratively, as shown in FIG. 7, the end surface of the end of the first tooth part 21 distal to the welding surface 1a is formed into a square, the orthographic projection of the second tooth part 22 on the welding surface 1a is circular, and then a part of a square region corresponding to the end surface of the end of the first tooth part 21 distal to the welding surface 1a, extending beyond the above circular region corresponding to the second tooth part 22, is annular. As shown in FIG. 12, the end surface of the end of the first tooth part 21 distal to the welding surface 1a is formed into a square, the orthographic projection of the second tooth part 22 on the welding surface 1a is square, and then a part of a square region corresponding to the end surface of the end of the first tooth part 21 distal to the welding surface 1a, extending beyond the above square region corresponding to the second tooth part 22, is annular. As shown in FIG. 13, the end surface of the end of the first tooth part 21 distal to the welding surface 1a is formed into a circle, the orthographic projection of the second tooth part 22 on the welding surface 1a is square, and then a part of a circular region corresponding to the end surface of the end of the first tooth part 21 distal to the welding surface 1a, extending beyond the above square region corresponding to the second tooth part 22, is annular. As shown in FIG. 14, the end surface of the end of the first tooth part 21 distal to the welding surface 1a is formed into a circle, the orthographic projection of the second tooth part 22 on the welding surface 1a is circular, and then a part of a circular region corresponding to the end surface of the end of the first tooth part 21 distal to the welding surface 1a, extending beyond the above circular region corresponding to the second tooth part 22, is annular.

It should be noted that in the embodiments of the present application, the term "annular shape" should be understood in a broad sense, including but not limited to a "circular shape", a "polygonal ring", and the like.

Certainly, the shape of the part of the end surface of the end of the (n-1)-th tooth part distal to the welding surface 1a, extending beyond the n-th tooth part, is not limited to an annular surface. For example, the end surface of the end of the (n-1)-th tooth part distal to the welding surface 1a is square, the outer contour of the n-th tooth part is also formed into a square, and one corner of the n-th tooth part is aligned with one corner of the (n-1)-th tooth part. In this case, the welding pressing surface 20a of the (n-1)-th tooth part is substantially in an L shape, and two corners of the n-th tooth part are correspondingly aligned with two corners of the (n-1)-th tooth part, respectively. In this case, the welding pressing surface 20a of the (n-1)-th tooth part is substantially in an elongated strip shape.

Referring to FIG. 4, in some embodiments, each of the first tooth part 21 to the m-th tooth part is of any one of a truncated pyramid structure, a circular frustum structure, and a spherical structure. That is, the first tooth part 21 is of a truncated pyramid structure, a circular frustum structure, or a spherical structure, the second tooth part 22 is of a truncated pyramid structure, a circular frustum structure, or a spherical structure, ..., and the m-th tooth part is of a truncated pyramid structure, a circular frustum structure, or a spherical structure.

It may be understood that shapes of the plurality of tooth parts 20 may be the same, or shapes of at least two tooth parts 20 among the plurality of tooth parts 20 are different.

In the above technical solution, each of the first tooth part 21 and the m-th tooth part is of any one of a truncated pyramid structure, a circular frustum structure, and a spherical structure, such that the structure of each tooth part 20 is simplified and the structural strength of each tooth part 20 is considered, which is beneficial to achieving a diversified structural design of the ultrasonic welding head 10, so as to better meet an actual differentiated requirement. In addition, a part of the end surface of an end of each of the first tooth part 21 to the (n-1)-th tooth part distal to the welding surface 1a is facilitated to form the welding pressing surface 20a, thereby improving welding quality.

Illustratively, the plurality of tooth parts 20 are a first tooth part 21 and a second tooth part 22, respectively. As shown in FIGs. 4, and 7 to 11, the first tooth part 21 is of a truncated pyramid structure, and the second tooth part 22 is of a spherical structure. As shown in FIG. 12, the first tooth part 21 and the second tooth part 22 are each of a truncated pyramid structure. As shown in FIG. 13, the first tooth part 21 is of a circular frustum structure, and the second tooth part 22 is of a truncated pyramid structure. As shown in FIG. 14, the first tooth part 21 is of a circular frustum structure, and the second tooth part 22 is of a spherical structure.

It can be understood that in the embodiments of the present application, the truncated pyramid structure includes but is not limited to a truncated triangular pyramid, a truncated square pyramid (the end surfaces of two ends of the truncated square pyramid in the protruding direction of the first welding tooth 2 may be quadrilateral such as rectangular, square, or rhombic), a truncated pentagonal pyramid, and the like. The truncated square pyramid structure with square end surfaces is used for the tooth part 20, which is beneficial to improving the welding reliability and service life of the first welding tooth 2. For example, in the example in FIG. 12, the first tooth part 21 and the second tooth part 22 are each of a truncated square pyramid structure.

In some embodiments, as shown in the figure, the first tooth part 21 is of a truncated square pyramid structure, the end surfaces of two ends of the truncated square pyramid structure in the protruding direction of the first welding tooth 2 are both square, the side length of the end surface of the first tooth part 21 corresponding to the second tooth part 22 is W1, and the side length of the end surface of the first tooth part 21 corresponding to the welding surface 1a is W2, where 0.2×W2 ≤ W1 < W2. For example, W1 may be 0.2×W2, 0.3×W2, 0.5×W2, 0.6×W2, 0.8×W2, or 0.9×W2.

Referring to FIGs. 4 and 7, in some embodiments, there is at least one first welding tooth 2, there is one first tooth part 21 of the first welding tooth 2, and from the first tooth part 21 to the m-th tooth part, the number of (n-1)-th tooth parts is less than or equal to the number of n-th tooth parts. Apparently, for a single first welding tooth 2, the number of m-th tooth parts is the largest, the number of first tooth parts 21 is the smallest, or the numbers of the plurality of tooth parts 20 are equal. In other words, in the single first welding tooth 2, the number of first tooth parts 21 ≤ the number of second tooth parts 22 ≤ ... ≤ the number of m-th tooth parts.

It can be seen that in the above technical solution, for a single first welding tooth 2, there is one tooth part 20 separately, or at least one tooth part 20 from the n-th tooth part to the m-th tooth part is plural in number. For example, for a single first welding tooth 2, m = 2; there is one first tooth part 21, and there are a plurality of second tooth parts 22. Alternatively, m = 3; there is one first tooth part 21 and one second tooth part 22 separately, and there are a plurality of third tooth parts. Alternatively, m = 3; there is one first tooth part 21, there are a plurality of second tooth parts 22 and a plurality of third tooth parts separately, and the number of second tooth parts 22 is less than or equal to the number of third tooth parts.

In the above technical solution, there is one first tooth part 21 of the first welding tooth 2, and the number of the (n-1)-th tooth parts is less than or equal to the number of the n-th tooth parts, such that in a region corresponding to the first welding tooth 2, a plurality of partial positions in the above region can be compacted by using at least a plurality of m-th tooth parts, which is beneficial to appropriately reducing the number of first welding teeth 2. When there are a plurality of first welding teeth 2, a plurality of partial positions in the welding region can be compacted by using the plurality of first welding teeth 2, which is beneficial to appropriately reducing the number of m-th tooth parts, thereby simplifying the structure of the first welding tooth 2.

Illustratively, as shown in FIGs. 4, 7, and 11 to 14, there are a plurality of first welding teeth 2, each first welding tooth 2 includes one first tooth part 21 and one second tooth part 22, and the central axis of the second tooth part 22 and the central axis of the first tooth part 21 may overlap, or may deviate from each other.

Referring to FIGs. 4 and 7, in some embodiments, there are a plurality of first welding teeth 2, and any two first welding teeth 2 are spaced apart.

In the above technical solution, there are the plurality of first welding teeth 2, and any two first welding teeth 2 are spaced apart, such that when the to-be-welded regions of the same area are welded, the plurality of first welding teeth 2 can compact a plurality of partial positions, so as to achieve compacting on the entire to-be-welded region. In addition, the number of first welding teeth 2 can be appropriately reduced, thereby facilitating the balance between welding quality and the simple structure of the ultrasonic welding head 10.

It may be understood that when there are a plurality of first welding teeth 2, the spacing between any two first welding teeth 2 may be specifically set based on an actual requirement.

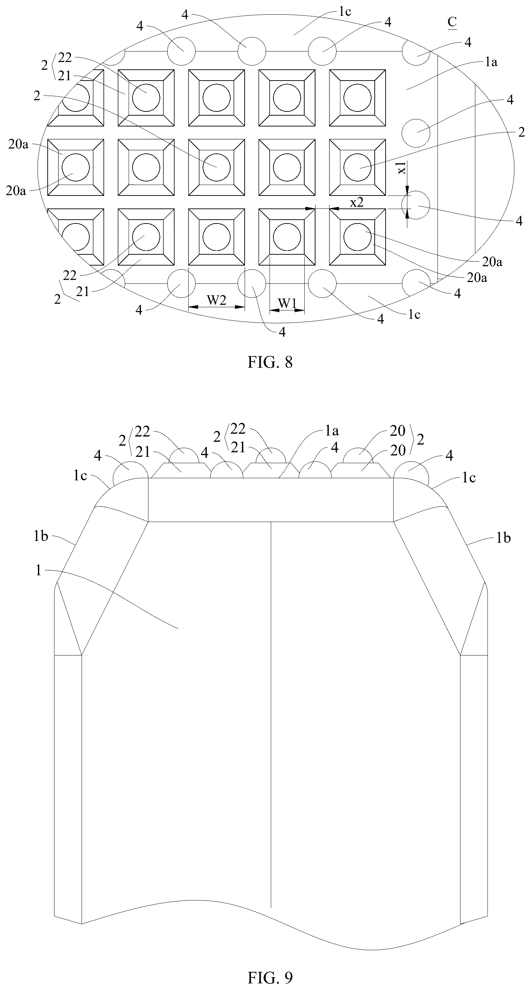

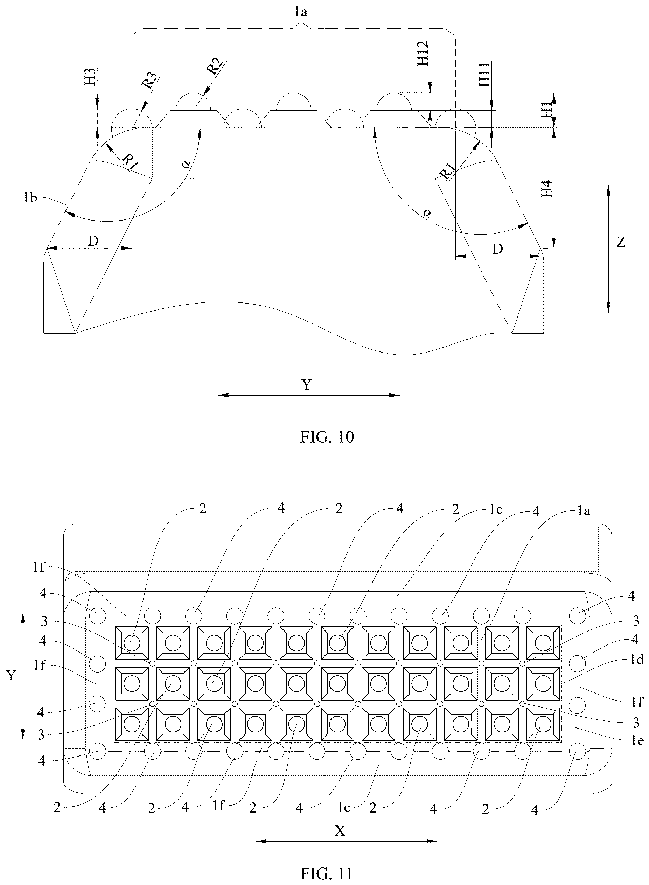

Referring to FIGs. 9 and 10, in some embodiments, the end surfaces of ends of the (n-1)-th tooth parts of the plurality of first welding teeth 2 distal to the welding surface 1a are arranged flush, and the welding pressing surfaces 20a of the (n-1)-th tooth parts of the plurality of first welding teeth 2 are arranged flush.

In the above technical solution, the end surfaces of the (n-1)-th tooth parts of the plurality of first welding teeth 2 distal to the welding surface 1a are arranged flush, such that the same-level tooth parts of the plurality of first welding teeth 2 have a substantially consistent compacting effect on the welding material, which is beneficial to reducing the risk of poor compacting effects or the first welding tooth 2 easily penetrating the welding material that can easily result from significant differences in compacting effects, thereby helping improve welding quality and welding yield.

It should be noted that the first tooth parts 21 of the plurality of first welding teeth 2 may be the same-level tooth parts, the second tooth parts 22 of the plurality of first welding teeth 2 may be the same-level tooth parts, the third tooth parts of the plurality of first welding teeth 2 may be the same-level tooth parts, and so on. Similarly, the m-th tooth parts of the plurality of first welding teeth 2 are the same-level tooth parts.

Illustratively, as shown in FIGs. 4, 8, and 11 to 14, the welding pressing surface 20a of the (n-1)-th tooth part is formed as a flat surface, and the welding pressing surfaces 20a of the (n-1)-th tooth parts of the plurality of first welding teeth 2 are located on the same plane, so as to simplify the structure of the tooth part 20.

Referring to FIG. 11, in some embodiments, the ultrasonic welding head 10 further includes at least one second welding tooth 3; the second welding tooth 3 is disposed in a protruding manner on the welding surface 1a, and the second welding tooth 3 is disposed between two adjacent first welding teeth 2.

In the above technical solution, the second welding tooth 3 is disposed between two adjacent first welding teeth 2, such that the second welding tooth 3 can perform compacting and pressing on a partial region on the welding material corresponding to the spacing between the two adjacent first welding teeth 2, so as to reasonably use the arrangement space provided by the welding head main body 1 to increase the compacting area of the welding material by the ultrasonic welding head 10. On the premise that the dimension of the ultrasonic welding head 10 is substantially not increased, this helps further reduce gaps between multiple layers of foil materials and improve welding quality.

For example, second welding teeth 3 are separately disposed between any two of the plurality of first welding teeth 2, and the second welding tooth 3 is spaced apart from two adjacent first welding teeth 2, so as to further increase the compacting area of the welding material by the ultrasonic welding head 10.

Referring to FIG. 11, in some embodiments, the plurality of first welding teeth 2 are arranged in a plurality of rows and a plurality of columns, a second welding tooth 3 is separately disposed between two adjacent columns of first welding teeth 2 in any two adjacent rows, and then a single second welding tooth 3 corresponds to two adjacent first welding teeth 2 in two adjacent rows of first welding teeth 2, that is, a single second welding tooth 3 may correspond to four first welding teeth 2.

In the above technical solution, the second welding tooth 3 is separately disposed between two adjacent columns of first welding teeth 2 in any two adjacent rows, such that the arrangement space on the welding surface 1a is reasonably used, thereby improving the compacting effect.

Illustratively, as shown in FIG. 11, a plurality of first welding teeth 2 spaced apart in a first direction form one row of welding teeth, a plurality of rows of welding teeth are spaced apart in a second direction, and the second welding tooth 3 is separately disposed in the region of the intersection position between two adjacent columns of first welding teeth 2 in any two adjacent rows. One of the first direction and the second direction may be the length direction X of the welding surface 1a, and the other may be the width direction Y of the welding surface 1a. The first direction and the second direction are not limited thereto, and the shape of the welding surface 1a is not limited to being rectangular. Certainly, the arrangement method of the plurality of first welding teeth 2 is not limited thereto.

Referring to FIG. 10, in some embodiments, in the protruding direction of the first welding tooth 2, the sum of the heights of the second tooth part 22 to the m-th tooth part is less than or equal to half of the height of the first welding tooth 2, and then, the sum of the heights of the second tooth part 22 to the m-th tooth part is less than or equal to the height of the first tooth part 21.

In the above technical solution, the sum of the heights of the second tooth part 22 to the m-th tooth part is less than or equal to half of the height of the first welding tooth 2, such that the height distribution of the plurality of tooth parts 20 in the first welding tooth 2 is relatively reasonable, and thus the penetration force of the first welding tooth 2 in the protruding direction thereof is relatively proper, which is beneficial to further reducing the risk that the first welding tooth 2 penetrates the welding material in the welding process. In addition, this reduces the probability of false welding in the ultrasonic welding process caused by poor contact between the first welding tooth 2 and the welding material, which occurs when the welding energy of the first welding tooth 2 is not effectively transferred to the welding material due to the relatively large sum of the heights of the second tooth part 22 to the m-th tooth part, thereby helping further improve welding tooth quality.

Illustratively, as shown in FIG. 10, m = 2; in the protruding direction of the first welding tooth 2, the height of the first tooth part 21 is H11, the height of the second tooth part 22 is H12, and the height of the first welding tooth 2 is H1, where H12 ≤ H1/2, and H1 = H11 + H12. Certainly, in some other examples, m = 3, and the height H11 of the first tooth part 21, the height H12 of the second tooth part 22, and the height H13 of the third tooth part satisfy H12 + H13 ≤ H1/2, and H1 = H11 + H12 + H13.

In some embodiments, as shown in FIG. 10, m = 2; in the protruding direction of the first welding tooth 2, the height of the first tooth part 21 is H11, the height of the second tooth part 22 is H12, the second tooth part 22 is of a spherical structure and the radius of the second tooth part 22 is R2, and the height of the first welding tooth 2 is H1, where 0.4×H1 ≤ R2 ≤ 0.8×H1, and 0.2×H1 ≤ H12 ≤ 0.8×H1, which is beneficial to improving the welding reliability of the second tooth part 22 on the welding material and the service life thereof. It can be seen that R2 and H12 may be equal or different. For example, R2 may be 0.4×H1, 0.5×H1, 0.7×H1, or 0.8×H1, and H12 may be 0.2×H1, 0.4×H1, 0.6×H1, 0.7×H1, or 0.8×H1.

Referring to FIGs. 5, 6, and 10, in some embodiments, in the ultrasonic vibration direction (e.g., Y direction in FIG. 5), at least one side of two opposite sides of the welding head main body 1 is provided with a clearance surface 1b, and the included angle α between the clearance surface 1b and the welding surface 1a is an obtuse angle.

In the above technical solution, at least one side of two opposite sides of the welding head main body 1 is provided with the clearance surface 1b in the ultrasonic vibration direction, and the included angle α between the clearance surface 1b and the welding surface 1a is an obtuse angle, such that the clearance surface 1b can be used to provide clearance for the warpage of other regions of the welding material, such as the edge region of the welding material, caused by pressurization on a partial region of the welding material by the welding head main body 1 in the welding process, so as to reduce the acting force between the welding head main body 1 and the above warping part of the welding material, thereby making it difficult for the welding head main body 1 to cut the welding material in the welding process and thus improving welding reliability. When the welding material includes a plurality of tab plates, the arrangement of the clearance surface 1b can effectively mitigate the cracking issue during the ultrasonic welding of the tab plates.

It can be understood that in the above technical solution, the width of the part of the welding head main body 1, which is correspondingly provided with the clearance surface 1b, in the ultrasonic vibration direction may gradually decrease in the protruding direction of the first welding tooth 2. The clearance surface 1b may be a flat surface or a curved surface. When the clearance surface 1b is a curved surface, on the preset cross section, the included angle between a tangent line at any point on the clearance surface 1b and the welding surface 1a is an obtuse angle, and the preset cross section is perpendicular to the clearance surface 1b and parallel to the ultrasonic vibration direction.

Referring to FIG. 10, in some embodiments, in the ultrasonic vibration direction, the distance between an end of the clearance surface 1b distal to the welding surface 1 and a corresponding end part of the welding surface 1a is D, where 0.3 mm ≤ D ≤ 2 mm; and/or, in the protruding direction of the first welding tooth 2, the distance between an end of the clearance surface 1b distal to the welding surface 1a and the welding surface 1a is H4, where 0.5 mm ≤ H4 ≤ 2 mm. For example, D may be 0.3 mm, 0.5 mm, 1 mm, 1.2 mm, 1.5 mm, 1.7 mm, or 2 mm; H4 may be 0.5 mm, 1 mm, 1.3 mm, 1.5 mm, 1.8 mm, or 2 mm.

In the above technical solution, the distance D between the end of the clearance surface 1b distal to the welding surface 1a and the corresponding end part of the welding surface 1a satisfies 0.3 mm ≤ D ≤ 2 mm, and/or, the distance H4 between the end of the clearance surface 1b distal to the welding surface 1a and the welding surface 1a satisfies 0.5 mm ≤ H4 ≤ 2 mm, such that the position and dimension of the clearance surface 1b are relatively reasonable, so as to better adapt to actual applications on the premise of providing effective clearance for the warping part of the welding material.

Further, 0.5 mm ≤ D ≤ 1 mm; and/or, H4 ≤ 1 mm. For example, D may be 0.6 mm, 0.8 mm, or 0.9 mm; H4 may be 0.6 mm, 0.7 mm, 0.8 mm, or 0.9 mm.

In the above technical solution, 0.5 mm ≤ D ≤ 1 mm, and/or, H4 ≤ 1 mm, such that the position and dimension of the clearance surface 1b are further enabled to be more reasonable, which is beneficial to improving the adaptability of the welding head main body 1 to different welding region dimensions on the premise of improving the cracking of the welding material.

Referring to FIGs. 9 and 10, in some embodiments, a smooth transition is achieved between the clearance surface 1b and the welding surface 1a through a circular arc surface 1c.

In the above technical solution, the smooth transition is achieved between the clearance surface 1b and the welding surface 1a through the circular arc surface 1c, and then two ends of the circular arc surface 1c can be tangent to the clearance surface 1b and the welding surface 1a, respectively, such that a part of the welding head main body 1 opposite to the welding material substantially has no sharp corner position; even if the welding head main body 1 is in contact with the welding material, the risk of the welding head main body 1 cutting the welding material can be further reduced.

Referring to FIGs. 9 and 10, in some embodiments, each clearance surface 1b is separately formed as a flat surface, and each clearance surface 1b is separately inclined relative to the welding surface 1a, such that each clearance surface 1b may be arranged gradually close to the welding surface 1a in the protruding direction of the first welding tooth 2 in the ultrasonic vibration direction.

In the above technical solution, each clearance surface 1b is separately formed as a flat surface and inclined relative to the welding surface 1a, so as to simplify the shape of the outer surface of the welding head main body 1 on the premise that the clearance surface 1b can provide clearance for the warping part of the welding material, thereby simplifying the structure of the welding head main body 1 and facilitating processing.

Referring to FIG. 10, in some embodiments, the radius of the circular arc surface 1c is R1, where 0.3 mm ≤ R1 ≤ 1.5 mm. For example, R1 may be 0.3 mm, 0.5 mm, 0.8 mm, 1 mm, 1.3 mm, or 1.5 mm.

In the above technical solution, the radius R1 of the circular arc surface 1c satisfies 0.3 mm ≤ R1 ≤ 1.5 mm, so as to reduce the risk of the welding head main body 1 cutting the welding material and save the space occupied by the welding head main body 1 at the same time, thereby preventing waste due to the excessively large dimension of the welding head main body 1 while preventing the welding head main body 1 from cutting the welding material.

Further, R1 ≤ 1 mm. Therefore, the dimension of the circular arc surface 1c is further reasonably set; a better balance is achieved between reducing the risk of the welding head main body 1 cutting the welding material and saving the space occupied by the welding head main body 1 at the same time. For example, R1 may be 0.4 mm, 0.6 mm, 0.7 mm, or 0.9 mm.

Referring to FIG. 7, in some embodiments, the welding surface 1a is provided with a first region 1d and a second region 1e. The first welding teeth 2 are disposed in the first region 1d. The ultrasonic welding head 10 further includes third welding teeth 4, the third welding teeth 4 are disposed in a protruding manner in the second region 1e and are disposed at the periphery of the plurality of first welding teeth 2, and then the second region 1e is located at the periphery of the first region 1d.

In the above technical solution, the first welding teeth 2 are disposed in the first region 1d and the third welding teeth 4 are disposed in the second region 1e, which is beneficial to increasing the area of the compacted region of the welding material by the welding head main body 1, increasing the number of partial regions where the welding head main body 1 compacts the welding material, and further improving ultrasonic welding quality. At the same time, the third welding tooth 4 can perform a certain pre-pressing and shaping on the peripheral part of the region of the welding material corresponding to the first welding tooth 2, so as to achieve pre-pressing and shaping on the welding material in advance. Moreover, the third welding tooth 4 can optimize the friction region between the welding material and the welding head main body 1 from the large-surface friction to the partial-surface friction, thereby reducing the local stress concentration of the welding material and further improving the cracking of the welding material.

It can be understood that when the ultrasonic welding head 10 welds the welding material, a part of the welding material may warp and has a tendency to adhere to the welding head main body 1. If the welding material adheres to the welding head main body 1, the welding material is likely to be torn, and gaps between multiple layers of foil materials are larger. The third welding tooth 4 in the embodiments of the present application can reduce the mechanical friction applied by the welding head main body 1 during the high-frequency vibration on the multiple layers of foil materials in the welding process, thereby improving the stress concentration of the welding material and reducing the risk of cracking of the welding material.

Illustratively, the structure of the third welding tooth 4 may be different from the structure of the first welding tooth 2.

Referring to FIG. 7, in some embodiments, the second region 1e is disposed around the first region 1d, and the second region 1e includes a plurality of first region segments 1f sequentially connected end to end. Each first region segment 1f is separately provided with a plurality of third welding teeth 4. A plurality of third welding teeth 4 of the plurality of first region segments 1f are disposed around the first region 1d. The spacing between two adjacent third welding teeth of the plurality of third welding teeth 4 in each first region segment 1f is set according to requirements.

In the above technical solution, each first region segment 1f in the second region 1e is separately provided with the plurality of third welding teeth 4, such that the third welding teeth 4 can perform a relatively comprehensive pre-pressing and shaping on the welding material. Therefore, no matter where the welding position corresponding to the welding head main body 1 is located on the welding material, the third welding teeth 4 can improve the cracking of the welding material.

Illustratively, as shown in FIG. 7, the first region 1d is in the shape of a rectangle; the second region 1e is in the shape of a square ring and includes four first region segments 1f. Each first region segment 1f is separately formed into the shape of an elongated strip. A plurality of third welding teeth 4 on each first region segment 1f may be spaced apart in the length direction of the corresponding first region segment 1f, so as to achieve a good pre-pressing and shaping effect by using a relatively small number of third welding teeth 4. Certainly, in some other examples, the first region 1d may also be in the shape of a circle, and the second region 1e is in the shape of a circular ring. In this case, the plurality of third welding teeth 4 may be spaced apart in a direction around the first region 1d.

Referring to FIG. 10, in some embodiments, the height H3 of the third welding tooth 4 protruding from the welding surface 1a is less than the height H1 of the first welding tooth 2 protruding from the welding surface 1a. The height of the first welding tooth 2 protruding from the welding surface 1a may be understood as the sum of the heights of the first tooth part 21 to the m-th tooth part in the protruding direction of the first welding tooth 2.

In the above technical solution, the height of the third welding tooth 4 protruding from the welding surface 1a is less than the height of the first welding tooth 2 protruding from the welding surface 1a, such that the third welding tooth 4 has a proper pre-pressing and shaping effect on the welding material; meanwhile, the structure of the ultrasonic head welding head 10 is simplified, and the material usage is reduced.

Referring to FIG. 10, in some embodiments, the height H3 of the third welding tooth 4 protruding from the welding surface 1a is greater than the height H11 of the first tooth part 21 protruding from the welding surface 1a.

In the above technical solution, the height of the third welding tooth 4 protruding from the welding surface 1a is greater than the height of the first tooth part 21 protruding from the welding surface 1a, such that the third welding tooth 4 is in contact with the welding material prior to the first tooth part 21, and thus the third welding tooth 4 achieves a proper pre-pressing and shaping effect on the welding material.

Referring to FIG. 10, in some embodiments, the third welding tooth 4 is of a spherical structure, the radius of the third welding tooth 4 is R3, and the height of the first welding tooth 2 protruding from the welding surface 1a is H1, where 0.2 ≤ R3/H1 ≤ 0.8. For example, R3/H1 may be 0.2, 0.4, 0.5, 0.7, or 0.8.

In the above technical solution, the third welding tooth 4 is of a spherical structure, such that the outer surface of the third welding tooth 4 has no sharp corners, thereby reducing the risk of the third welding tooth 4 cutting the welding material. In addition, 0.2 ≤ R3/H1 ≤ 0.8, such that the third welding tooth 4 can be in contact with the welding material prior to the welding surface 1a, so as to achieve a good pre-pressing and shaping effect.

Certainly, the structure of the third welding tooth 4 is not limited thereto. For example, the third welding tooth 4 may also be of a truncated pyramid structure, a circular frustum structure, a combination structure of a spherical structure and a truncated pyramid structure (e.g., a spherical structure and a truncated square pyramid structure), or a combination structure of a spherical structure and a circular frustum structure.

Further, 0.1 mm ≤ R3 ≤ 0.3 mm. For example, R3 may be 0.1 mm, 0.15 mm, 0.2 mm, 0.26 mm, or 0.3 mm.

Referring to FIG. 10, in some embodiments, the welding head main body 1 is provided with a clearance surface 1b on at least one side of two opposite sides in the ultrasonic vibration direction, the included angle between the clearance surface 1b and the welding surface 1a is an obtuse angle, and a smooth transition is achieved between the clearance surface 1b and the welding surface 1a through a circular arc surface 1c; the third welding teeth 4 are disposed at the connection positions between the second region 1e and the circular arc surface 1c, and then a part of the third welding tooth 4 is disposed in the second region 1e, and the other part of the third welding tooth 4 is disposed on the circular arc surface 1c.

In the above technical solution, the third welding teeth 4 are disposed at the connection positions between the second region 1e and the circular arc surface 1c, such that the third welding tooth 4 can perform pre-pressing and shaping on the welding material, while reasonably using the arrangement space provided by the welding surface 1a in the ultrasonic vibration direction. This reduces the volume of the ultrasonic welding head 10 in the ultrasonic vibration direction and reduces costs.

In a second aspect, the embodiments of the present application provide an ultrasonic welding device, including the above ultrasonic welding head 10.

In the above technical solution, the ultrasonic welding device adopts the above ultrasonic welding head 10, and the ultrasonic welding head 10 can perform multi-layer pressing on the welding material to compact the welding material without penetrating the welding material, thereby improving welding quality and welding efficiency.

In a third aspect, the embodiments of the present application provide an electrode assembly 30. The electrode assembly 30 includes an active substance-coated part 31 and a tab part 32. The tab part 32 is connected to the active substance-coated part 31. Illustratively, a part of a positive electrode plate provided with a positive electrode active substance layer, a separator, and a part of a negative electrode plate provided with a negative electrode active substance layer are sequentially stacked, and the active substance-coated part 31 is formed by winding, stacking, or the like. The active substance-coated part 31 may be divided into a positive electrode active substance-coated part and a negative electrode active substance-coated part. The positive electrode active substance-coated part includes a part in which the positive electrode plate is coated with the positive electrode active substance layer, and the negative electrode active substance-coated part includes a part in which the negative electrode plate is coated with the negative electrode active substance layer. A positive electrode tab part is electrically connected to the positive electrode active substance-coated part and a positive electrode post terminal. A negative electrode tab part is electrically connected to the negative electrode active substance-coated part and a negative electrode post terminal. In the electrode assembly 40, at least one of the positive electrode tab part and the negative electrode tab part may be configured as the above tab part 32.

The tab part 32 includes a plurality of stacked tab plates, and the plurality of tab plates are welded and fixed. A weld mark region is provided on one side of the thickness of each of at least two tab plates, first welding grooves are formed in the weld mark region, and the first welding groove includes a plurality of groove parts. The plurality of groove parts are a first groove part to an m-th groove part sequentially arranged in the concave direction of the first welding groove, respectively; an n-th groove part is disposed at the bottom wall of an (n-1)-th groove part, and the bottom wall of the (n-1)-th groove part is provided to extend beyond the n-th groove part, where 2 ≤ n ≤ m.

It can be seen that for the plurality of groove parts, in any two adjacent groove parts, the n-th groove part is disposed on a side wall of the (n-1)-th groove part opposite to the opening thereof (i.e., the bottom wall of the (n-1)-th groove part); the (n-1)-th groove part occupies a part of the bottom wall of the (n-1)-th groove part, such that the bottom wall of the (n-1)-th groove part extends beyond the (n-1)-th groove part.

For example, if m = 2, then the plurality of groove parts are a first groove part and a second groove part sequentially arranged in the concave direction of the first welding groove, respectively. The second groove part is disposed on the bottom wall of the first groove part. The bottom wall of the first groove part is provided to extend beyond the second groove part, and then in the thickness direction of the tab, the orthographic projection of the second groove part is located within the range of the outer contour of the orthographic projection of the bottom wall of the first groove part, such that a part of the orthographic projection of the bottom wall of the first groove part extends beyond the outer contour of the orthographic projection of the second groove part.

For another example, if m = 3, then the plurality of groove parts are a first groove part, a second groove part, and a third groove part sequentially arranged in the concave direction of the first welding groove, respectively. The second groove part is disposed on the bottom wall of the first groove part, and the bottom wall of the first groove part is provided to extend beyond the second groove part; then in the thickness direction of the tab, the orthographic projection of the second groove part is located within the range of the outer contour of the orthographic projection of the bottom wall of the first groove part, such that a part of the orthographic projection of the bottom wall of the first groove part extends beyond the outer contour of the orthographic projection of the second groove part. The third groove part is disposed on the bottom wall of the second groove part, and the bottom wall of the second groove part is provided to extend beyond the third groove part; then in the thickness direction of the tab, the orthographic projection of the third groove part is located within the range of the outer contour of the orthographic projection of the bottom wall of the second groove part, such that a part of the orthographic projection of the bottom wall of the second groove part extends beyond the outer contour of the orthographic projection of the third groove part.

For another example, if m = 4, then the plurality of groove parts are a first groove part, a second groove part, a third groove part, and a fourth groove part sequentially arranged in the concave direction of the first welding groove, respectively. The second groove part is disposed on the bottom wall of the first groove part, and the bottom wall of the first groove part is provided to extend beyond the second groove part; then in the thickness direction of the tab, the orthographic projection of the second groove part is located within the range of the outer contour of the orthographic projection of the bottom wall of the first groove part, such that a part of the orthographic projection of the bottom wall of the first groove part extends beyond the outer contour of the orthographic projection of the second groove part. The third groove part is disposed on the bottom wall of the second groove part, and the bottom wall of the second groove part is provided to extend beyond the third groove part; then in the thickness direction of the tab, the orthographic projection of the third groove part is located within the range of the outer contour of the orthographic projection of the bottom wall of the second groove part, such that a part of the orthographic projection of the bottom wall of the second groove part extends beyond the outer contour of the orthographic projection of the third groove part. The fourth groove part is disposed on the bottom wall of the third groove part, and the bottom wall of the third groove part is provided to extend beyond the fourth groove part; then in the thickness direction of the tab, the orthographic projection of the fourth groove part is located within the range of the outer contour of the orthographic projection of the bottom wall of the third groove part, such that a part of the orthographic projection of the bottom wall of the third groove part extends beyond the outer contour of the orthographic projection of the fourth groove part.

Certainly, for the tab, m may also be greater than or equal to 5.

It can be seen that for any two adjacent groove parts, a plurality of tab plates corresponding to the part of the bottom wall of the (n-1)-th groove part, extending beyond the (n-1)-th groove part, may be pressed and compacted during welding. In the welding process, a structure on a welding device corresponding to the m-th groove part is in contact with the tab plates prior to other parts, so as to achieve pre-pressing and shaping on partial regions of the plurality of tab plates, reducing gaps between the plurality of tab plates; in addition, the structure on the welding device corresponding to the m-th groove part may be used to compact and press the plurality of tab plates. As the welding device continuously applies pressure, the depth of the first welding groove increases to form an (m-1)-th groove part to the first groove part. In this process, a part of the bottom wall of each groove part from the (m-1)-th groove part to the first groove part, extending beyond the corresponding groove part, may be formed by the welding device through multiple pre-pressing and shaping operations, so as to further reduce gaps between the plurality of tab plates, such that the plurality of tab plates are subjected to multi-layer pressing by the welding device in the welding process to form a weld mark region; the plurality of tab plates are not penetrated, but the first welding grooves are formed in the weld mark region, thereby effectively mitigating the issue of an excessively large interval between multiple layers of foil materials in the welding process, and improving welding quality and welding stability.

It can be understood that in the embodiments of the present application, a weld mark region is provided on one side of the thickness of each of at least two of the plurality of tab plates of the tab part 32, and then a part of the plurality of tab plates of the tab part 32 are welded and fixed to form the weld mark region, or all the tab plates of the tab part 32 are welded and fixed to form the weld mark region.

In the above technical solution, the weld mark region is provided on the side of the thickness of each of at least two tab plates, the first welding grooves are formed in the weld mark region, the first welding groove includes the first groove part to the m-th groove part sequentially arranged in the concave direction of the first welding groove, the n-th groove part is disposed on the bottom wall of the (n-1)-th groove part, and the bottom wall of the (n-1)-th groove part is provided to extend beyond the n-th groove part, such that when the at least two tab plates are welded and fixed, the welding device can perform multi-layer pressing on the at least two tab plates to form a plurality of groove parts, thereby effectively reducing gaps between the plurality of tab plates while preventing the plurality of tab plates from being penetrated, thereby improving welding quality, facilitating the good welding of the tab part 32 to other components (e.g., a post terminal or an adapting piece), and facilitating improvement in the service reliability of the battery cell 100.

For example, the weld mark region of the tab part 32 in the embodiments of the present application may be formed by welding the plurality of tab plates by the ultrasonic welding head 10 in the embodiments of the present application. In this case, the weld mark region may correspond to the welding surface 1a, and the first welding groove may correspond to the first welding tooth 2. That is, in the welding process, the first welding tooth 2 may form the first welding groove in the tab part 32, such that the plurality of groove parts may correspond to the plurality of tooth parts 20, respectively, the first groove part corresponds to the first tooth part 21, and the m-th groove part corresponds to the m-th tooth part.

In some embodiments, a part of the bottom wall of the (n-1)-th groove part, extending beyond the n-th groove part, is an annular surface.

In the above technical solution, the part of the bottom wall of the (n-1)-th groove part, extending beyond the n-th groove part, is an annular surface, such that the welding device performs a large-area and even pressing on a partial region, which is beneficial to improving the compacting effect on the plurality of tab plates.

In some embodiments, there is at least one first welding groove, there is one first groove part of the first welding groove, and from the first groove part to the n-th groove part, the number of the (n-1)-th groove parts is less than or equal to the number of the n-th groove parts.

In the above technical solution, there is one first groove part of the first welding groove, and the number of the (n-1)-th groove parts is less than or equal to the number of the n-th groove parts, such that a plurality of partial positions can be compacted in a region corresponding to the first welding groove, which is beneficial to simplifying the structure of the welding device.

In some embodiments, there are a plurality of first welding grooves, and any two first welding grooves are spaced apart. In the above technical solution, there are the plurality of first welding grooves, and any two first welding grooves are spaced apart, such that when the to-be-welded regions of the same area are welded, the welding device can compact a plurality of partial positions, so as to achieve compacting on the entire to-be-welded region.

In some embodiments, the bottom walls of the (n-1)-th groove parts of the plurality of first welding grooves are arranged flush. It can be seen that the bottom walls of the (n-1)-th groove parts of the plurality of first welding grooves are arranged flush, such that the welding device is facilitated to generate a substantially consistent compacting effect on the plurality of tab plates at the same level positions, which is beneficial to reducing the risk of poor compacting effects or the tab plates being penetrated that can easily result from significant differences in compacting effects, thereby helping improve welding quality and welding yield.

In some embodiments, at least one second welding groove is further formed in the weld mark region, and the second welding groove is disposed between two adjacent first welding grooves.

In the above technical solution, the arrangement of the second welding groove is beneficial to increasing the compacting area of the plurality of tab plates by the welding device without increasing the dimension of the welding device substantially.

It can be seen that if the weld mark region of the tab part 32 is formed by welding the plurality of tab plates by the ultrasonic welding head 10 in the embodiments of the present application, the second welding groove may correspond to the second welding tooth 3 in this case, that is, the second welding groove can be formed in the tab part 32 by the second welding tooth 3 in the welding process.

In some embodiments, the plurality of first welding grooves are arranged in a plurality of rows and a plurality of columns, and the second welding groove is separately disposed between two adjacent columns of the first welding grooves in any two adjacent rows. In the above technical solution, the second welding groove is separately disposed between two adjacent columns of the first welding grooves in any two adjacent rows, such that the welding device further reasonably uses the occupied space to improve the compacting effect on the plurality of tab plates.

In some embodiments, in the concave direction of the first welding groove, the sum of the depths of the second groove part to the m-th groove part is less than or equal to half of the depth of the first welding groove. In the above technical solution, the sum of the depths of the second groove part to the m-th groove part is less than or equal to half of the depth of the first welding groove, such that the depth distribution of the plurality of groove parts in the first welding groove is relatively reasonable, which reduces the risk of the tab plates being penetrated, and is beneficial to improving the contact effect between the welding device and the tab plates at the same time, thereby reducing the probability of false welding.

In some embodiments, the weld mark region includes a third region and a fourth region, the first welding grooves are formed in the third region, third welding grooves are further formed in the weld mark region, and the third welding grooves are formed in the fourth region and located at the periphery of the plurality of first welding grooves. In the above technical solution, the arrangement of the third welding grooves enables the welding device to perform a certain pre-pressing and shaping on the plurality of tab plates at positions corresponding to the third welding grooves. In addition, this enables the welding device to optimize the friction region between the tab plates and the device into partial-surface friction, thereby reducing the local stress concentration of the tab plates and improving the cracking of the tab plates.

It can be seen that if the weld mark region of the tab part 32 is formed by welding the plurality of tab plates by the ultrasonic welding head 10 in the embodiments of the present application, the third welding groove may correspond to the third welding tooth 4 in this case, that is, the third welding groove can be formed in the tab part 32 by the third welding tooth 4 in the welding process.

In some embodiments, the fourth region is disposed around the third region and includes a plurality of second region segments sequentially connected end to end, each second region segment is separately provided with a plurality of third welding grooves, and a plurality of third welding grooves of the plurality of second region segments are disposed around the third region. In the above technical solution, the plurality of welding grooves are disposed around the third region, such that a relatively comprehensive pre-pressing and shaping can be performed on the tab plates at positions on the welding device corresponding to the third welding grooves.

In some embodiments, the depth of the third welding groove is less than the depth of the first welding groove. Therefore, a proper pre-pressing and shaping effect is achieved on the tab plate on the premise that the welding device can reduce the cracking of the tab plate.

In some embodiments, the depth of the third welding groove is greater than the depth of the first groove part. Therefore, a proper pre-pressing and shaping effect is also achieved on the tab plate on the premise that the welding device can reduce the cracking of the tab plate.

In a fourth aspect, the embodiments of the present application provide a battery cell 100, including a housing, a post terminal, and the above electrode assembly 30. The post terminal is disposed on the housing, the active substance-coated part 31 is accommodated in the housing, and the tab part 32 is electrically connected to the post terminal. Illustratively, an accommodating cavity is formed inside the housing, and the active substance-coated part 31 is received in the accommodating cavity. The post terminal is provided in the housing in a penetrating manner. The tab part 32 is directly welded to the post terminal or connected to the post terminal through an adapting piece, such that the tab part 32 is electrically connected between the active substance-coated part 31 and the post terminal. In the above technical solution, the battery cell 100 adopts the above electrode assembly 30, and the tab part 32 of the electrode assembly 30 can be well welded directly or indirectly to the post terminal, such that the service reliability of the battery cell 100 can be improved.

In a fifth aspect, the embodiments of the present application provide a battery 200, including the above battery cell 100. In the above technical solution, the battery 200 adopts the above battery cell 100, and the battery cell 100 has good service reliability, such that the use reliability of the battery 200 can be improved.

In a sixth aspect, the embodiments of the present application provide an electric device 1000, including the above battery 200. The battery 200 is configured to provide electric energy. In the above technical solution, the electric device 1000 adopts the above battery 200, and the battery 200 has good use reliability, such that the reliable use of the electric device 1000 can be achieved.

Referring to FIGs. 3 to 10 again, the ultrasonic welding head 10 in specific embodiments of the present application is described.

In the embodiments of the present application, the ultrasonic welding head 10 includes a welding head main body 1 and a plurality of first welding teeth 2. The welding head main body 1 is provided with a welding surface 1a. The plurality of first welding teeth 2 are arranged in a plurality of rows and a plurality of columns and spaced apart. Each first welding tooth 2a is disposed in a protruding manner on the welding surface 1a. Each first welding tooth 2 includes a first tooth part 21 and a second tooth part 22 sequentially arranged in the protruding direction of the first welding tooth 2. The second tooth part 22 is disposed on the end surface of an end of the first tooth part 21 distal to the welding surface 1a; the end surface of the end of the first tooth part 21 distal to the welding surface 1a extends beyond the second tooth part 22; a part of the end surface of the end of the first tooth part 21 distal to the welding surface 1a, extending beyond the second tooth part 22, is an annular surface. The end surfaces of the first tooth parts 21 of the plurality of first welding teeth 2 distal to the welding surface 1a are arranged flush, and the end surfaces of the second tooth parts 22 of the plurality of first welding teeth 22 distal to the welding surface 1a are arranged flush. In the protruding direction of the first welding tooth 2, the height of the second tooth part 22 is less than or equal to half of the height of the first welding tooth 2.

The welding surface 1a is rectangular. In the width direction of the welding surface 1a, two opposite sides of the welding head main body 1 are provided with clearance surfaces 1b, respectively. Each clearance surface 1b is separately formed as a flat surface, and the included angle between the clearance surface and the welding surface 1a is an obtuse angle. A smooth transition is achieved between each clearance surface 1b and the welding surface 1a through a circular arc surface 1c separately. The radius R1 of the circular arc surface 1c satisfies 0.3 mm ≤ R1 ≤ 1 mm, so as to further mitigate the issues of interference of tooling fixtures caused by an excessively large welding head main body 1 and cracking during welding of the welding material caused by an excessively small welding head main body 1 in an actual manufacturing process.

The ultrasonic welding head 10 further includes a plurality of third welding teeth 4. The plurality of third welding teeth 4 are spaced apart in a direction around all the first welding teeth 2, such that the plurality of third welding teeth 4 are arranged in a circle around all the first welding teeth 2. Therefore, a plurality of third welding teeth 4 are separately disposed on two sides of all the first welding teeth 2 in the X direction, a plurality of third welding teeth 4 are separately disposed on two sides of all the first welding teeth 2 in the Y direction, the height of the third welding teeth 4 protruding from the welding surface 1a is less than the height of the first welding teeth 2 protruding from the welding surface 1a, and the height of the third welding teeth 4 protruding from the welding surface 1a is greater than the height of the first tooth part 21 protruding from the welding surface 1a. A part of third welding teeth 4 among the plurality of third welding teeth 4 are disposed at the connection positions between the circular arc surface 1c and the welding surface 1a.

The second tooth part 22 is of a spherical structure; the radius R2 of the second tooth part 22 ranges from 0.1 mm to 0.3 mm, the height H12 of the second tooth part 22 ranges from 0.1 mm to 0.4 mm, and the height H1 of the first welding tooth 2 ranges from 0.4 mm to 0.8 mm. The first tooth part 21 is of a truncated square pyramid structure, and the end surface of the first tooth part 21 corresponding to the welding surface 1a and the end surface of the first tooth part 21 corresponding to the second tooth part 22 are both square; the side length W1 of the end surface of the first tooth part 21 corresponding to the second tooth part 22 ranges from 0.1 mm to 0.6 mm, and the side length W2 of the end surface of the first tooth part 21 corresponding to the welding surface 1a ranges from 0.5 mm to 1 mm. The third welding tooth 4 is of a spherical structure; the radius R3 of the third welding tooth 4 ranges from 0.1 mm to 0.3 mm; on the plane where the welding surface 1a is located, the width D of the orthographic projection of the clearance surface 1b in the ultrasonic vibration direction ranges from 0.5 mm to 1 mm, and the distance H4 between an end of the clearance surface 1b distal to the welding surface 1a and the welding surface 1a ranges from 0.5 mm to 1 mm. In the ultrasonic vibration direction, the spacing between two adjacent first welding teeth 2 is x1, and in a direction perpendicular to the ultrasonic vibration direction, the spacing between two adjacent first welding teeth 2 is x2, where x1 = x2 and both range from 0.2 mm to 0.4 mm. This helps improve the flow uniformity of multiple layers of welding materials during ultrasonic welding.

In the above technical solution, when the ultrasonic welding head welds the welding material, each tooth part can perform compacting and pressing on multiple layers of foil materials of the welding material, to achieve multi-layer pressing on the welding material and compacting on the welding material, thereby effectively reducing gaps between the multiple layers of foil materials, further reducing welding energy loss easily caused by an excessively large inter-layer gap between the multiple layers of foil materials, and preventing the first welding tooth from penetrating the welding material, thereby improving welding quality and welding efficiency.

It should be noted that in the absence of conflicts, the embodiments and features in the embodiments in the present application may be combined with each other. The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. An ultrasonic welding head, comprising:
a welding head main body, wherein the welding head main body is provided with a welding surface; and
first welding teeth, wherein the first welding teeth are disposed in a protruding manner on the welding surface, the first welding tooth comprises a plurality of tooth parts, and the plurality of tooth parts are a first tooth part to an m-th tooth part sequentially arranged in a protruding direction of the first welding tooth, respectively, wherein an n-th tooth part is disposed on an end surface of an end of an (n-1)-th tooth part distal to the welding surface, and the end surface of the end of the (n-1)-th tooth part distal to the welding surface extends beyond the n-th tooth part, where 2 ≤ n ≤ m.

2. The ultrasonic welding head according to claim 1, wherein a part of the end surface of the end of the (n-1)-th tooth part distal to the welding surface, extending beyond the n-th tooth part, is an annular surface.

3. The ultrasonic welding head according to claim 1 or 2, wherein each of the first tooth part to the m-th tooth part is of any one of a truncated pyramid structure, a circular frustum structure, and a spherical structure.

4. The ultrasonic welding head according to any one of claims 1 to 3, wherein there is at least one first welding tooth, there is one first tooth part of the first welding tooth, and from the first tooth part to the m-th tooth part, a number of the (n-1)-th tooth parts is less than or equal to a number of the n-th tooth parts.

5. The ultrasonic welding head according to any one of claims 1 to 4, wherein there are a plurality of first welding teeth, and any two first welding teeth are spaced apart.

6. The ultrasonic welding head according to claim 5, wherein end surfaces of the (n-1)-th tooth parts of the plurality of first welding teeth distal to the welding surface are arranged flush.

7. The ultrasonic welding head according to claim 5 or 6, wherein the ultrasonic welding head further comprises:
at least one second welding tooth, wherein the second welding tooth is disposed in a protruding manner on the welding surface, and the second welding tooth is disposed between two adjacent first welding teeth.

8. The ultrasonic welding head according to claim 7, wherein the plurality of first welding teeth are arranged in a plurality of rows and a plurality of columns, and the second welding teeth are respectively disposed between two adjacent columns of the first welding teeth in any two adjacent rows.

9. The ultrasonic welding head according to any one of claims 1 to 8, wherein in the protruding direction of the first welding tooth, a sum of heights of a second tooth part to the m-th tooth part is less than or equal to half of a height of the first welding tooth.

10. The ultrasonic welding head according to any one of claims 1 to 9, wherein in an ultrasonic vibration direction, at least one side of two opposite sides of the welding head main body is provided with a clearance surface, and an included angle between the clearance surface and the welding surface is an obtuse angle.

11. The ultrasonic welding head according to claim 10, wherein
on a plane where the welding surface is located, a width of an orthographic projection of the clearance surface in the ultrasonic vibration direction is D, where 0.3 mm ≤ D ≤ 2 mm; and/or
a distance between an end of the clearance surface distal to the welding surface and the welding surface is H4, where 0.5 mm ≤ H4 ≤ 2 mm.

12. The ultrasonic welding head according to claim 11, wherein
0.5 mm ≤ D ≤ 1 mm; and/or, H4 ≤ 1 mm.

13. The ultrasonic welding head according to any one of claims 10 to 12, wherein the clearance surface smoothly transitions to the welding surface through a circular arc surface.

14. The ultrasonic welding head according to claim 13, wherein each clearance surface is separately formed as a flat surface and inclined relative to the welding surface.

15. The ultrasonic welding head according to claim 14, wherein a radius of the circular arc surface is R1, where 0.3 mm ≤ R1 ≤ 1.5 mm.

16. The ultrasonic welding head according to claim 15, wherein R1 ≤ 1 mm.

17. The ultrasonic welding head according to any one of claims 1 to 16, wherein the welding surface is provided with a first region and a second region, and the first welding teeth are disposed in the first region; and
the ultrasonic welding head further comprises:
third welding teeth, wherein the third welding teeth are disposed in a protruding manner in the second region and are disposed at a periphery of a plurality of first welding teeth.

18. The ultrasonic welding head according to claim 17, wherein the second region is disposed around the first region and comprises a plurality of first region segments sequentially connected end to end, each first region segment is separately provided with a plurality of third welding teeth, and a plurality of third welding teeth of the plurality of first region segments are disposed around the first region.

19. The ultrasonic welding head according to claim 17 or 18, wherein a height of the third welding tooth protruding from the welding surface is less than a height of the first welding tooth protruding from the welding surface.

20. The ultrasonic welding head according to any one of claims 17 to 19, wherein the height of the third welding tooth protruding from the welding surface is greater than a height of the first tooth part protruding from the welding surface.

21. The ultrasonic welding head according to any one of claims 17 to 20, wherein the third welding tooth is of a spherical structure, a radius of the third welding tooth is R3, and the height of the first welding tooth protruding from the welding surface is H1, where 0.2 ≤ R3/H1 ≤ 0.8.

22. The ultrasonic welding head according to claim 21, wherein 0.1 mm ≤ R3 ≤ 0.3 mm.

23. The ultrasonic welding head according to any one of claims 17 to 22, wherein the welding head main body is provided with a clearance surface on at least one side of two opposite sides in the ultrasonic vibration direction, an included angle between the clearance surface and the welding surface is an obtuse angle, the clearance surface smoothly transitions to the welding surface through a circular arc surface, and the third welding teeth are disposed at connection positions between the second region and the circular arc surface.

24. An ultrasonic welding device, comprising the ultrasonic welding head according to any one of claims 1 to 23.

25. An electrode assembly, comprising an active substance-coated part and a tab part, wherein the tab part is connected to the active substance-coated part, and the tab part comprises a plurality of stacked tab plates that are welded and fixed, wherein a weld mark region is provided on one side of a thickness of each of at least two tab plates, a first welding groove is formed in the weld mark region, and the first welding groove comprises a plurality of groove parts; and the plurality of groove parts are a first groove part to an m-th groove part sequentially arranged in a concave direction of the first welding groove, respectively, an n-th groove part is disposed at a bottom wall of an (n-1)-th groove part, and the bottom wall of the (n-1)-th groove part is provided to extend beyond the n-th groove part, where 2 ≤ n ≤ m.

26. The electrode assembly according to claim 25, wherein a part of the bottom wall of the (n-1)-th groove part, extending beyond the n-th groove part, is an annular surface.

27. The electrode assembly according to claim 25 or 26, wherein there is at least one first welding groove, there is one first groove part of the first welding groove, and from the first groove part to the n-th groove part, a number of the (n-1)-th groove parts is less than or equal to a number of the n-th groove parts.

28. The electrode assembly according to any one of claims 25 to 27, wherein there are a plurality of first welding grooves, and any two first welding grooves are spaced apart.

29. The electrode assembly according to claim 28, wherein bottom walls of the (n-1)-th groove parts of the plurality of first welding grooves are arranged flush.

30. The electrode assembly according to claim 28 or 29, wherein at least one second welding groove is further formed in the weld mark region, and the second welding groove is disposed between two adjacent first welding grooves.

31. The electrode assembly according to claim 30, wherein the plurality of first welding grooves are arranged in a plurality of rows and a plurality of columns, and the second welding grooves are respectively disposed between two adjacent columns of the first welding grooves in any two adjacent rows.

32. The electrode assembly according to any one of claims 25 to 31, wherein in the concave direction of the first welding groove, a sum of depths of a second groove part to the m-th groove part is less than or equal to half of a depth of the first welding groove.

33. The electrode assembly according to any one of claims 25 to 32, wherein the weld mark region comprises a third region and a fourth region, and the first welding grooves are formed in the third region; and
third welding grooves are further formed in the weld mark region, and the third welding grooves are formed in the fourth region and located at a periphery of the plurality of first welding grooves.

34. The electrode assembly according to claim 33, wherein the fourth region is disposed around the third region and comprises a plurality of second region segments sequentially connected end to end, each second region segment is separately provided with a plurality of third welding grooves, and a plurality of third welding grooves of the plurality of second region segments are disposed around the third region.

35. The electrode assembly according to claim 33 or 34, wherein a depth of the third welding groove is less than the depth of the first welding groove.

36. The electrode assembly according to any one of claims 33 to 35, wherein the depth of the third welding groove is greater than a depth of the first groove part.

37. A battery cell, comprising a housing, a post terminal, and the electrode assembly according to any one of claims 25 to 36, wherein the post terminal is disposed on the housing, the active substance-coated part is accommodated in the housing, and the tab part is electrically connected to the post terminal.

38. A battery, comprising the battery cell according to claim 37.

39. An electric device, comprising the battery according to claim 38, wherein the battery is configured to provide electric energy.
